(19) Europäisches Patentamt
European Patent Office
Office européen des brevets

(11) **EP 4 333 191 A1**

(12) **EUROPEAN PATENT APPLICATION**
published in accordance with Art. 153(4) EPC

(43) Date of publication:
**06.03.2024 Bulletin 2024/10**

(21) Application number: **22875112.9**

(22) Date of filing: **29.09.2022**

(51) International Patent Classification (IPC):
**H01M 50/533** (2021.01)      **H01M 50/536** (2021.01)
**H01M 10/04** (2006.01)

(52) Cooperative Patent Classification (CPC):
**H01M 50/00; Y02E 60/10; Y02P 70/50**

(86) International application number:
**PCT/CN2022/122805**

(87) International publication number:
**WO 2023/051731 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 PCT/CN2021/122108**

(71) Applicant: **Contemporary Amperex Technology
Co., Limited
Ningde, Fujian 352100 (CN)**

(72) Inventors:
• **CHAI, Zhisheng
Ningde, Fujian 352100 (CN)**
• **JIN, Haizu
Ningde, Fujian 352100 (CN)**
• **GU, Hui
Ningde, Fujian 352100 (CN)**
• **GUO, Zhijun
Ningde, Fujian 352100 (CN)**

(74) Representative: **Rowlands, Stuart Michael et al
Maucher Jenkins
Seventh Floor Offices
Artillery House
11-19 Artillery Row
London SW1P 1RT (GB)**

(54) **BATTERY CELL, BATTERY, AND ELECTRICAL DEVICE**

(57)   The present application provides a battery cell, a battery, and an electrical device. The battery cell comprises a casing, an electrode assembly, an end cap, and a current collecting component. The casing has an opening. The electrode assembly is accommodated in the casing, and the electrode assembly has a first tab at the end facing the opening. The end cap is used to cover the opening. The current collecting component is electrically connected to the casing and is welded to the first tab.

FIG. 4

EP 4 333 191 A1

## Description

### Cross-Reference to Related Application

The present application claims priority to the International Patent Application No. PCT/CN 2021/122108, entitled "BATTERY CELL, MANUFACTURING METHOD AND SYSTEM THEREFOR, BATTERY, AND POWER CONSUMING DEVICE", filed on September 30, 2021, which is incorporated herein by reference in its entirety.

### Technical Field

The present application relates to the technical field of batteries, and more particularly, to a battery cell, a battery, and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may include a nickel-cadmium battery cell, a nickel-hydrogen battery cell, a lithium-ion battery cell, a secondary alkaline zinc-manganese battery cell, etc.

In the development of the battery technology, in addition to improving the performance of battery cells, the safety is also a non-negligible issue. If the safety of battery cells cannot be guaranteed, the battery cells cannot be used. Therefore, how to enhance the safety of battery cells is an urgent technical problem to be solved in the battery technology.

### Summary of the Invention

The present application provide a battery cell, a battery, and a power consuming device, with enhanced safety of the battery cell.

According to a first aspect, an embodiment of the present application provides a battery cell, comprising a housing, an electrode assembly, an end cap, and a current collecting member. The housing is provided with an opening. The electrode assembly is accommodated inside the housing, and the electrode assembly is provided with a first tab at an end facing the opening. The end cap is configured to cover the opening. The current collecting member is electrically connected to the housing and welded to the first tab.

In the above technical solution, the current collecting member is provided, such that the first tab is electrically connected to the housing by means of the current collecting member, thereby omitting a process for welding the first tab to the housing. The electrical connection between the current collecting member and the housing is less affected by a first tab, thereby reducing the risk of occurrence of micro-cracks in the housing, improving the sealing performance and reducing potential safety hazards. When the current collecting member is welded to the tab, even if micro-cracks occur to the current collecting member, the sealing performance of the battery cell will not be affected.

In some implementations, the current collecting member abuts against an end surface of the first tab facing the end cap, and the current collecting member is welded to the first tab to form a first welding portion.

In the above technical solution, the end surface of the first tab is relatively flat, and a connection area and a connection area strength between the current collecting member and the first tab can be increased by welding the end surface of the first tab to the current collecting member. The first welding portion can reduce contact resistance between the current collecting member and the first tab and increase an overcurrent capability.

In some implementations, the electrode assembly further comprises a main body, and the first tab protrudes from an end surface of the main body facing the end cap. In a thickness direction of the end cap, a part of the first welding portion formed in the first tab has a size of H1, the first tab protrudes from the end surface by a size of H2, wherein H1 and H2 meet: $0.06 \leq H1/H2 \leq 0.9$.

Larger H1 indicates a higher welding strength between the first tab and the current collecting member, more heat generated during welding, and a higher temperature of the first tab. Smaller H2 indicates a smaller space occupied by the first tab, a higher space utilization rate and energy density of the battery cell, and more heat conducted to the main body during welding. If H1/H2 is too large, H1 is too large and H2 is too small, excessive heat is conducted to the main body during welding, and there is a high risk that a separator of the main body is burned, thereby easily causing potential safety hazards.

Smaller H1 indicates a lower welding strength between the first tab and the current collecting member, less heat generated during welding, and a lower temperature of the first tab. Larger H2 indicates a larger space occupied by the first tab, a lower space utilization rate and energy density of the battery cell, and less heat conducted to the main body during welding. If H1/H2 is too small, H1 is too small and H2 is too large, the welding strength between the current collecting member and the first tab is low, the first welding portion is prone to failure when the battery cell is subjected to an external impact, and the first tab occupies a larger space, resulting in a relatively low energy density of the battery cell.

In the above technical solution, when H1/H2 is limited to 0.06-0.9, the welding strength between the current collecting member and the first tab and the risk that the separator of the main body is burned can be taken into account, and the energy density of the battery cell can be increased.

In some implementations, H1 and H2 meet: $0.1 \leq H1/H2 \leq 0.2$.

In the above technical solution, the welding strength between the current collecting member and the first tab and the risk that the separator of the main body is burned can be better taken into account, and the energy density of the battery cell can be increased.

In some implementations, a value of H1 is between 0.2 mm-1 mm.

If H1 is too small, the welding strength between the current collecting member and the first tab will be insufficient; and when the battery cell is subjected to an external impact, the first welding portion is prone to breakage, resulting in the failure of the battery cell. If H1 is too large, excessive heat is generated during welding, which causes the risk that the separator of the main body is burned, thereby easily causing potential safety hazards.

In the above technical solution, the welding strength between the current collecting member and the first tab and the risk that the separator of the main body is burned can be better taken into account.

In some implementations, the electrode assembly is wound along a central axis. In a radial direction of the first tab, a minimum distance L1 between the first welding portion and the central axis is between 4 mm -9 mm.

The first tab comprises a plurality of layer structures that each is around the central axis. A current on a layer structure directly connected to the first welding portion can be directly transmitted to the current collecting member through the first welding portion. A current on a layer structure not connected to the first welding portion needs to be first transmitted to the layer structure directly connected to the first welding portion and then the current can be transmitted to the current collecting member through the first welding portion, which leads in a difference in conductive paths between the plurality of layer structures and the housing. If the difference is excessive, a polarization problem is easily caused. If L1 is too small, a distance between the first welding portion and the outermost layer structure is too large, such that there is an excessive difference between a current path between the outermost layer structure and the housing and a current path between the innermost layer structure and the housing, resulting in a non-uniform current density of a first electrode plate of the electrode assembly and increasing internal resistance. If L1 is too large, the number of layer structures connected to the first welding portion is too small, a distance between the first welding portion and the innermost layer structure is too large, such that there is an excessive difference between the current path between the outermost layer structure and the housing and the current path between the innermost layer structure and the housing, resulting in the non-uniform current density of the first electrode plate and increasing the internal resistance.

In the above technical solution, L1 is limited to 4 mm-9 mm to reduce the internal resistance and meet requirements of the battery cell for the overcurrent capability and temperature rise.

In some implementations, the electrode assembly further comprises a main body, and the main body comprises an end surface facing the end cap and an outer peripheral surface surrounding the end surface. The first tab protrudes from the end surface of the main body. In the radial direction of the first tab, a minimum distance L2 between the first welding portion and the outer peripheral surface is 1 mm -7 mm.

Smaller L2 indicates more heat conducted to the outer peripheral surface during welding, and a higher risk that the main body is burned. If L2 is too small, excessive heat is conducted to the main body during welding, and there is a high risk that the separator of the main body is burned, thereby easily causing potential safety hazards. Larger L2 indicates a larger distance between the first welding portion and the outermost layer structure. If L2 is too larger, the distance between the first welding portion and the outermost layer structure is too large, such that there is an excessive difference between the current path between the outermost layer structure and the housing and the current path between the innermost layer structure and the housing, resulting in a non-uniform current density of the first electrode plate of the electrode assembly and increasing the internal resistance.

In the above technical solution, L2 is limited to 1 mm -7 mm to reduce the risk that the main body is burned, improve the safety, reduce the internal resistance, and meet requirements of the battery cell for the overcurrent capability and temperature rise.

In some implementations, the electrode assembly is wound along a central axis, the first tab comprises N layer structures arranged around the central axis, and an extension direction of the central axis is parallel to the thickness direction of the end cap. The first tab is composed of a first annular portion and a second annular portion surrounding an outer side of the first annular portion, N1 layer structures are provided in the first annular portion, N2 layer structures are provided in the second annular portion, wherein N = N1 + N2, a value of |N1 - N2| is less than or equal to 2, and N1 and N2 are positive integers. The first annular portion is welded to the current collecting member to form a first part, the second annular portion is welded to the current collecting member to form a second part connected to the first part, and the first welding portion is composed of the first part and the second part.

Electrons in a region of the electrode assembly that corresponds to the first annular portion can move along a first current path formed by the first annular portion, the first part, the current collecting member, and the housing, and electrons in a region of the electrode assembly that corresponds to the second annular portion can move along a second current path formed by the second annular portion, the second part, the current collecting member, and the housing. In addition, a boundary between the first annular portion and the second annular portion is substantially located in a middle region of the first tab in the radial direction.

In the above technical solution, the boundary between the first annular portion and the second annular portion is substantially located in the middle region of the first tab in the radial direction, and some layer structures in the middle region of the first tab are welded to the current collecting member to form a part of the first welding portion, which can reduce a difference between the first current path and the second current path to a certain extent, so as to improve the uniformity of the current density, reduce the internal resistance, and increase the overcurrent capability.

In some implementations, N3 continuous layer structures in the first annular portion that are close to the second annular portion are welded to the current collecting member to form the first part, N4 continuous layer structures in the second annular portion that are close to the first annular portion are welded to the current collecting member to form the second part, the N3 continuous layer structures and the N4 continuous layer structures are continuously arranged, wherein N4 > N3 $\geq$ 1, and N3 and N4 are positive integers.

Because the second annular portion surrounds the outer side of the first annular portion, a perimeter of each of the layer structures in the second annular portion is greater than that of each of the layer structures in the first annular portion, and the electrons in the region of the electrode assembly that corresponds to the second annular portion have a relatively long transmission path between the layer structures in the second annular portion. In the above technical solution, layer structures connected to the second part can be increased to reduce the transmission of the electrons between the layer structures in the second annular portion, thereby shortening the second current path and further reducing the difference between the first current path and the second current path, so as to improve the uniformity of the current density, reduce the internal resistance, and increase the overcurrent capability.

In some implementations, M continuous layer structures of all the layer structures are welded to the current collecting member to form the first welding portion, wherein 1/3 $\leq$ M/N $\leq$ 1/2, M $\geq$ 2, and M is a positive integer.

A greater value of M/N indicates smaller internal resistance of the first tab, a larger area of the first welding portion, and a higher overcurrent capability between the first tab and the current collecting member. However, when the area of the current collecting member is constant, a greater value of M/N indicates a smaller area of the current collecting member that can be welded to another component, and a lower overcurrent capability between the current collecting member and the housing. In the above technical solution, the value of M/N is limited to a range from 1/3 to 1/2, so as to balance the overcurrent capability between the first tab and the current collecting member and the overcurrent capability between the current collecting member and the housing, and optimize the overcurrent capability of the battery cell.

In some implementations, a plurality of first welding portions are provided, and the plurality of first welding portions are spaced apart from each other in a circumferential direction of the first tab.

In some implementations, in the thickness direction of the end cap, the first welding portion is spaced apart from the end cap, so as to reduce the risk that the first welding portion crushes the end cap, and improve the sealing performance and safety.

In some implementations, the end cap comprises a cap body and a first protrusion protruding from an inner surface of the cap body in a direction facing the first tab, the first protrusion is configured to abut against the current collecting member, and a first avoidance gap for avoiding the first welding portion is formed between the current collecting member and the cap body.

In the above technical solution, the first avoidance gap for avoiding the first welding portion is formed to prevent the first welding portion from abutting against the cap body, and reduce the risk that the first welding portion crushes the cap body. If the first welding portion abuts against the cap body, over-positioning is caused between the end cap and the current collecting member, such that the first welding portion interferes with the abutment between the first protrusion and the current collecting member. In the above technical solution, the first avoidance gap is provided to prevent the first welding portion from interfering with the abutment between the first protrusion and the current collecting member, and to ensure the connection strength between the first protrusion and the current collecting member.

In some implementations, a first recess recessed from an outer surface of the cap body in a direction facing the electrode assembly is formed on the end cap at a position corresponding to the first protrusion.

In the above technical solution, the first recess can reduce the strength of the first protrusion and improve an elastic deformation capability of the first protrusion. In this way, during abutment of the first protrusion against the current collecting member, the first protrusion can release a stress by means of deformation and reduce an impact force and reduce the risk that the current collecting member and the first tab are crushed.

In some implementations, the current collecting member comprises a first current collecting portion and a second current collecting portion, the first current collecting portion is connected to the end cap, and the second current collecting portion protrudes from a surface of the first current collecting portion facing the electrode assembly. The current collecting member is provided with an avoidance recess, and the avoidance recess is located on a side of the second current collecting portion that faces away from the electrode assembly. A region of the second current collecting portion that corresponds to a bottom surface of the avoidance recess is welded to the first tab to form the first welding portion.

In the above technical solution, the avoidance recess for avoiding the first welding portion is provided to prevent the first welding portion from interfering with the connection between the first current collecting portion and the end cap, ensure the connection strength between the first current collecting portion and the end cap, and reduce the risk that the first welding portion crushes the end cap. The avoidance recess can reduce the thickness of the second current collecting portion, so as to reduce welding power required for welding the second current collecting portion to the first tab and reduce generated heat and the risk that another member is burned.

In some implementations, the current collecting member is welded to the end cap to form a second welding portion.

In the above technical solution, the second welding portion can electrically connect the current collecting member to the end cap. The welding between the current collecting member and the end cap is less affected by the first tab, thereby reducing the risk of occurrence of micro-cracks in the end cap caused by unevenness of the first tab, improving the sealing performance, reducing potential safety hazards, and improving the safety.

In some implementations, a projection of the first welding portion in the thickness direction of the end cap and a projection of the second welding portion in the thickness direction of the end cap do not overlap.

The above technical solution can reduce the influences from the first welding portion during welding of the end cap to the current collecting member, and improve the welding reliability between the end cap and the current collecting member.

In some implementations, the current collecting member is directly connected to the housing.

The above technical solution can shorten a conductive path between the current collecting member and the housing, and increase the overcurrent capability of the battery cell.

In some implementations, the current collecting member is welded to the housing.

In the above technical solution, welding can reduce contact resistance between the current collecting member and the housing, increase the overcurrent capability between the current collecting member and the housing, and increase the connection strength between the current collecting member and the housing.

In some implementations, the current collecting member is spaced apart from the end cap, so as to reduce an acting force on the end cap when the battery cell is subjected to an external impact, reduce the risk of cracking of the end cap, and improve the safety and sealing performance.

In some implementations, the housing comprises a side wall and a bottom wall connected to the side wall, wherein the side wall extends in the thickness direction of the end cap and is arranged around a periphery of the electrode assembly, and the bottom wall is provided with an electrode lead-out hole. The electrode assembly further comprises a second tab, wherein the first tab and the second tab have opposite polarities, and the second tab is arranged at an end of the electrode assembly facing the bottom wall. The battery cell further comprises an electrode terminal mounted in the electrode lead-out hole, and the electrode terminal is electrically connected to the second tab.

In the above technical solution, the bottom wall and the electrode terminal may be used as two output electrodes of the battery cell, which can simplify the structure of the battery cell and ensure the overcurrent capability of the battery cell. The bottom wall and the electrode terminal are located at the same end of the battery cell, such that when a plurality of battery cells are assembled into a group, and busbar components may be assembled on the same side of the battery cells, thereby simplifying an assembly process and improving the assembly efficiency.

In some implementations, the bottom wall and the side wall are of an integrally formed structure.

In the above technical solution, a process for connecting the bottom wall to the side wall can be omitted, and resistance at a connection between the bottom wall and the side wall can be reduced.

In some implementations, the first tab is a negative tab, and a substrate material of the housing is steel.

In the above technical solution, the housing is electrically connected to the negative tab, i.e., the housing is in a low potential state. The housing made of steel is not prone to corrosion by an electrolyte in the low potential state to reduce the safety risk.

In some implementations, the substrate material of the housing and a substrate material of the end cap are the same, which can increase the welding strength between the housing and the end cap and ensure the sealing performance of the battery cell.

In some implementations, the battery cell is a cylindrical battery cell.

According to a second aspect, an embodiment of the present application provides a battery, comprising a plurality of battery cells according to any one of the embodiments of the first aspect.

According to a third aspect, an embodiment of the present application provides a power consuming device, comprising a battery according to the second aspect, wherein the battery is configured to provide electric energy.

Brief Description of the Drawings

In order to illustrate the technical solutions of the embodiments of the present application more clearly, the accompanying drawings required in the embodiments of the present application will be described briefly below. It will be apparent that the accompanying drawings described below show merely some embodiments of the present application, and for those of ordinary skill in the art, other accompanying drawings can also be obtained from these accompanying drawings without any creative efforts.

FIG. 1 is a schematic structural diagram of a vehicle according to some embodiments of the present application;

FIG. 2 is a schematic exploded view of a battery according to some embodiments of the present application;

FIG. 3 is a schematic exploded view of a battery module shown in FIG. 2;

FIG. 4 is a schematic exploded view of a battery cell according to some embodiments of the present application;

FIG. 5 is a schematic cross-sectional view of a battery cell according to some embodiments of the present application;

FIG. 6 is a schematic enlarged view of the battery cell shown in FIG. 5 at box A;

FIG. 7 is a schematic enlarged view of FIG. 6 at circle B;

FIG. 8 is a schematic assembly diagram of a current collecting member and an electrode assembly of a battery cell according to some embodiments of the present application; and

FIG. 9 is a schematic structural diagram of the electrode assembly shown in FIG. 8;

FIG. 10 is a schematic cross-sectional view of a battery cell according to some other embodiments of the present application;

FIG. 11 is a schematic cross-sectional view of a battery cell according to some still other embodiments of the present application;

FIG. 12 is a schematic enlarged view of the battery cell shown in FIG. 11 at circle C;

FIG. 13 is a schematic cross-sectional view of a battery cell according to some yet other embodiments of the present application;

FIG. 14 is a schematic enlarged view of the battery cell shown in FIG. 13 at box D;

FIG. 15 is a schematic cross-sectional view of a battery cell according to some still other embodiments of the present application;

FIG. 16 is a schematic enlarged view of the battery cell shown in FIG. 15 at box E.

In the accompanying drawings, the figures are not drawn to scale.

Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. It will be apparent that the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion. The terms "first", "second", etc. in the description and the claims of the present application as well as the above accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase 'at various locations in the description' does not necessarily refer to the same embodiment, or an independent or alternative embodiment exclusive with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meaning of the foregoing term in the present application may be understood according to specific circumstances.

The term "and/or" in the present application is merely a description of the associated relationship of associated objects, representing that three relationships may exist. For example, A and/or B may be expressed as the following three cases: Only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

"A plurality of" appearing in the present application means two or more (including two).

In the present application, a battery cell may comprise a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application. The battery cell may be cylindrical, flat, cuboid or in another shape, which will also not be limited in the embodiments of the present application.

A battery mentioned in the embodiments of the present application refers to a single physical module including one or more battery cells to provide a high voltage and capacity. For example, the battery mentioned in the present application may include a battery module, a battery pack, or the like. The battery generally includes a case for enclosing one or more battery cells. The case can prevent liquid or other foreign matter from affecting the charging or discharging of a battery cell.

The battery cell comprises an electrode assembly and an electrolyte, the electrode assembly comprising a positive electrode plate, a negative electrode plate, and a separator. The battery cell operates mainly by relying on movements of metal ions between the positive electrode plate and the negative electrode plate. The positive electrode plate includes a positive current collector and a positive active material layer, wherein a surface of the positive current collector is coated with the positive active material layer. The positive current collector comprises a positive current collecting region and a positive tab protruding from the positive current collecting region, wherein the positive current collecting region is coated with the positive active material layer, and at least a part of the positive tab is not coated with the positive active material layer. Taking a lithium-ion battery as an example, the positive current collector may be made of aluminum, and the positive active material layer comprises a positive active material which may be lithium cobalt oxides, lithium iron phosphate, ternary lithium, lithium manganate, or the like. The negative electrode plate comprises a negative current collector and a negative active material layer, wherein a surface of the negative current collector is coated with the negative active material layer. The negative current collector comprises a negative current collecting region and a negative tab protruding from the negative current collecting region, wherein the negative current collecting region is coated with the negative active material layer, and at least a part of the negative tab is not coated with the negative active material layer. The negative current collector may be made of copper, and the negative active material layer comprises a negative active material which may be carbon, silicon, etc. The separator may be made of polypropylene (PP), polyethylene (PE), or the like.

The battery cell further comprises a housing and an end cap, wherein the housing has an opening and is configured for accommodating an electrode assembly, and the electrode assembly can be assembled into the housing through the opening of the housing. The end cap is configured to cover the opening of the housing to implement sealing.

In order to simplify the structure of the battery cell, the inventors have tried to connect the housing to a tab to use the housing as an output electrode of the battery cell, thereby omitting a conventional electrode terminal to simplify the structure of the battery cell.

In order to implement an electrical connection between the housing and the tab, the inventors welded the housing to the tab. However, the inventors have found through research that an end surface of the tab is uneven, such that it is difficult to closely attach the tab to the housing. After the housing is welded to the tab, the housing may be susceptible to micro-cracks, which may lead to the risk of failure in sealing the housing and cause potential safety hazards.

In view of this, an embodiment of the present application provides a technical solution in which a current collecting member is arranged in a battery cell, such that a tab is electrically connected to a housing by means of the current collecting member. The electrical connection between the current collecting member and the housing is less affected by a first tab, thereby reducing the risk of occurrence of micro-cracks in the housing, improving the sealing performance and reducing potential safety hazards. When the current collecting member is welded to the tab, even if micro-cracks occur to the current collecting member, the sealing performance of the battery cell will not be affected.

The technical solution described in the embodiment of the present application is applicable to a battery and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

For ease of description, an example in which a power consuming device is a vehicle is used for description in the following embodiments.

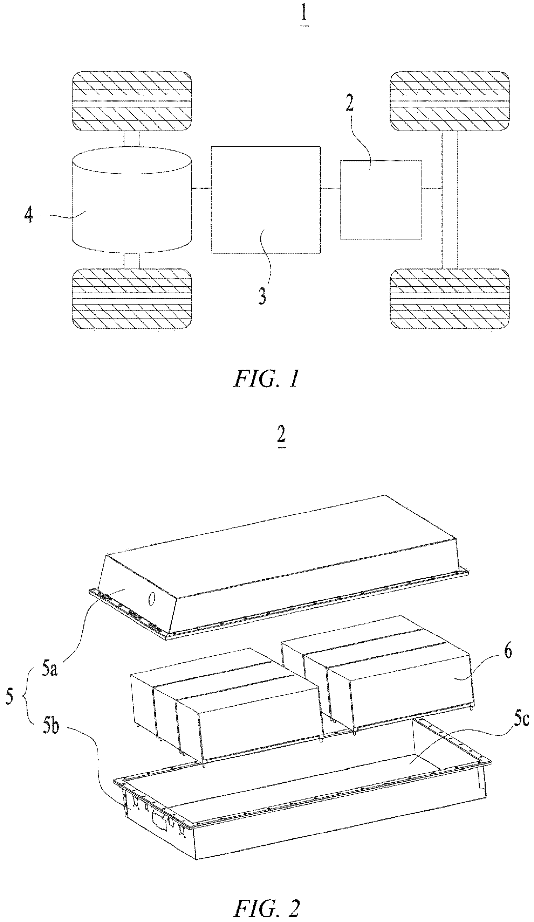

FIG. 1 is a schematic structural diagram of a vehicle according to some embodiments of the present application. As shown in FIG. 1, a battery 2 is provided inside a vehicle 1, and the battery 2 may be arranged at the bottom, the head or the tail of the vehicle 1. The battery 2 may be used for power supply for the vehicle 1. For example, the battery 2 may serve as a power source for operating the vehicle 1.

The vehicle 1 may further comprise a controller 3 and a motor 4, wherein the controller 3 is configured to control the battery 2 to supply power to the motor 4, for example, to meet operating power demands during starting, navigation and traveling of the vehicle 1.

In some embodiments of the present application, the battery 2 can not only serve as a power source for operating the vehicle 1, but also serve as a power source for driving the vehicle 1, instead of or partially instead of fuel or natural gas, to provide driving power for the vehicle 1.

FIG. 2 is a schematic exploded view of a battery according to some embodiments of the present application. As shown in FIG. 2, the battery 2 comprises a case 5 and battery cells (not shown in FIG. 2) which are accommodated inside the case 5.

The case 5 is configured for accommodating the battery cells, and the case 5 may be of various structures. In some embodiments, the case 5 may comprise a first case portion 5a and a second case portion 5b, the first case portion 5a and the second case portion 5b cover each other, and the first case portion 5a and the second case portion 5b jointly define an accommodating space 5c for accommodating the battery cells. The second case portion 5b may be of a hollow structure with an open end, the first case portion 5a is of a plate-like structure, and the first case portion 5a covers an open side of the second case portion 5b to form the case 5 with the accommodating space 5c. The first case portion 5a and the second case portion 5b each may also be of a hollow structure with an open side, and the open side of the first case portion 5a covers the open side of the second case portion 5b to form the case 5 with the accommodating space 5c. Of course, the first case portion 5a and the second case portion 5b have various shapes such as a cylinder and a cuboid.

To improve the sealing performance after the first case portion 5a and the second case portion 5b are connected to each other, a seal, such as a sealant and a seal ring, may be provided between the first case portion 5a and the second case portion 5b.

Assuming that the first case portion 5a covers the top of the second case portion 5b, the first case portion 5a may also be referred to as an upper case cover, and the second case portion 5b may also be referred to as a lower case.

In the battery 2, one or more battery cells may be provided. If a plurality of battery cells are provided, the plurality of battery cells may be in series connection or parallel connection or series-parallel connection. The series-parallel connection means that some of the plurality of battery cells are in series connection and some are in parallel connection. The plurality of battery cells may be directly in series connection or parallel connection or series-parallel connection, and then a unit composed of the plurality of battery cells is accommodated inside the case 5. Of course, a plurality of battery cells may also be first in series connection or parallel connection or series-parallel connection to form a battery module 6, and a plurality of battery modules 6 are in series connection or parallel connection or series-parallel connection to form a unit and are accommodated inside the case 5.

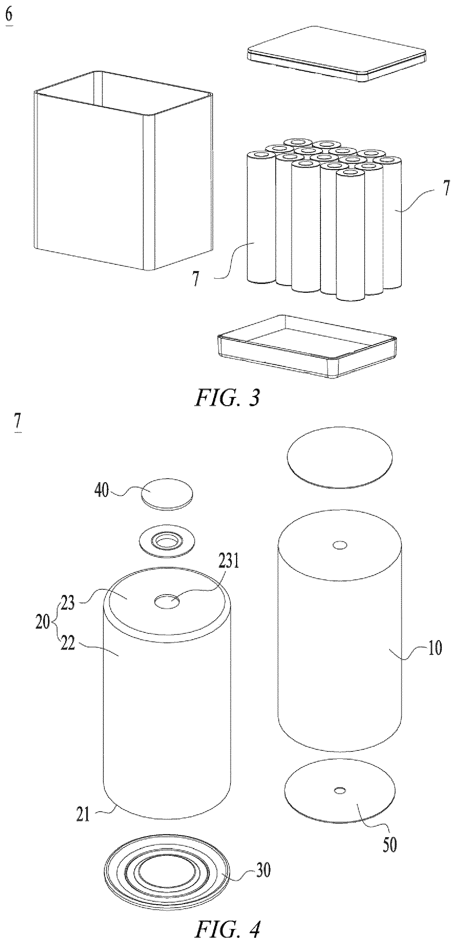

FIG. 3 is a schematic exploded view of a battery module shown in FIG. 2.

In some embodiments, as shown in FIG. 3, a plurality of battery cells 7 are provided, and the plurality of battery cells 7 are first connected in series or in parallel or in series-parallel to form a battery module 6. A plurality of battery modules 6 are connected in series or in parallel or in series-parallel to form a unit and are accommodated inside the case.

The plurality of battery cells 7 in the battery module 6 may be electrically connected to each other by means of a busbar component to implement series connection or parallel connection or series-parallel connection between the plurality of battery cells 7 in the battery module 6.

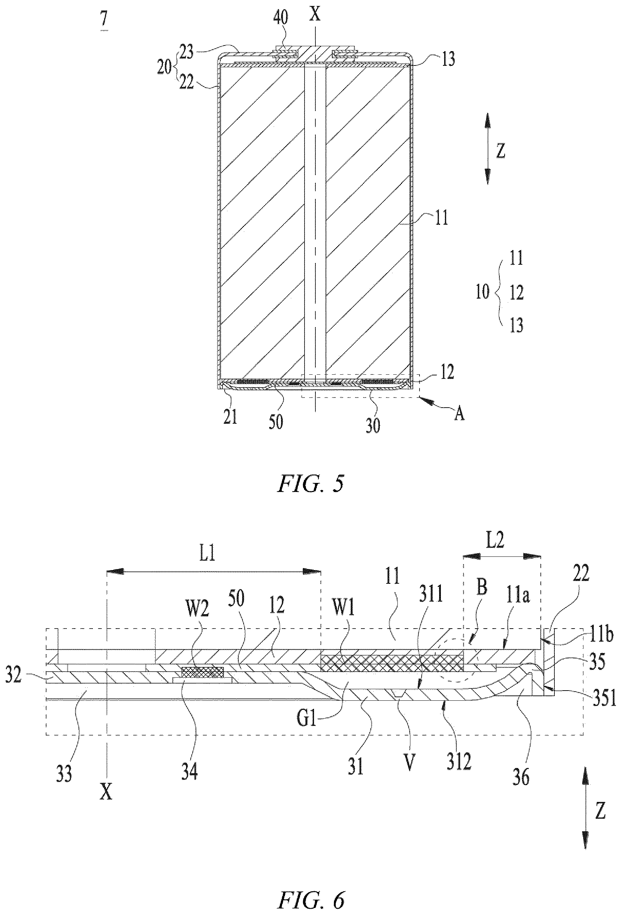

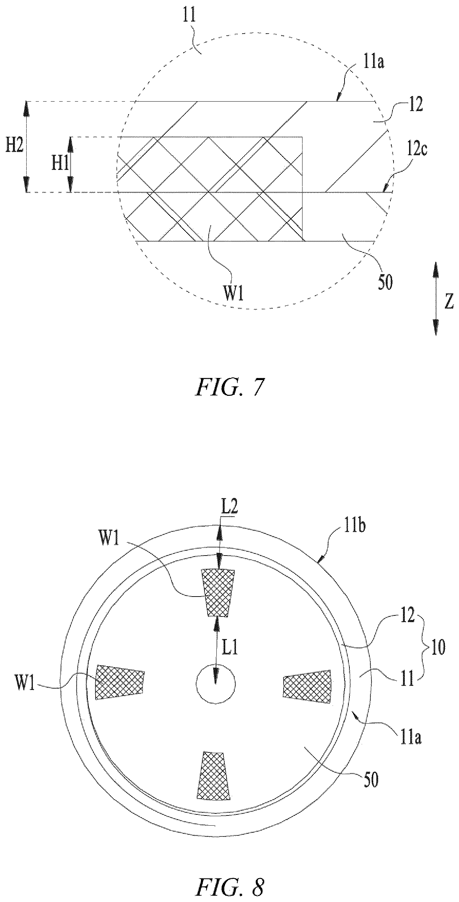

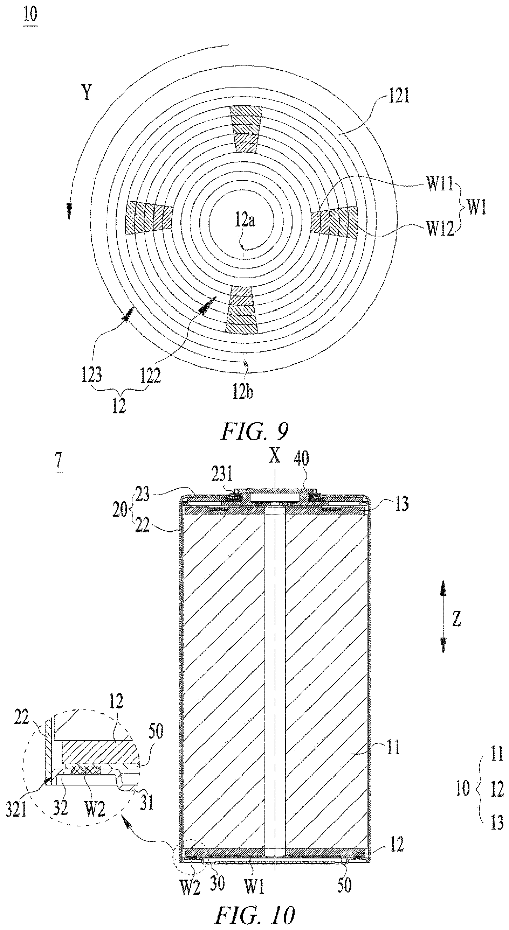

FIG. 4 is a schematic exploded view of a battery cell according to some embodiments of the present application; FIG. 5 is a schematic cross-sectional view of a battery cell according to some embodiments of the present application; FIG. 6 is a schematic enlarged view of the battery cell shown in FIG. 5 at box A; FIG. 7 is a schematic enlarged view of FIG. 6 at circle B; FIG. 8 is a schematic assembly diagram of a current collecting member and an electrode assembly of a battery cell according to some embodiments of the present application; and FIG. 9 is a schematic structural diagram of the electrode assembly shown in FIG. 8.

As shown in FIGS. 4-9, the battery cell 7 according to the embodiments of the present application comprises a housing 20, an electrode assembly 10, an end cap 30, and a current collecting member 50. The housing 20 is provided with an opening 21. The electrode assembly 10 is accommodated inside the housing 20, and the electrode assembly 10 is provided with a first tab 12 at an end facing the opening 21. The end cap 30 is configured to cover the opening 21. The current collecting member 50 is electrically connected to the housing 20 and welded to the first tab 12.

The electrode assembly 10 comprises a first electrode plate, a second electrode plate, and a separator, wherein the separator is configured to separate the first electrode plate from the second electrode plate. The first electrode plate and the second electrode plate have opposite polarities, in other words, one of the first electrode plate and the second electrode plate is a positive electrode plate, and the other of the first electrode plate and the second electrode plate is a negative electrode plate.

Optionally, the first electrode plate, the second electrode plate and the separator each are of a strip-shaped structure, and the first electrode plate, the second electrode plate and the separator are wound as one piece to form a wound structure. The wound structure may be a cylindrical structure, a flat structure or a structure of another shape.

Seen from the appearance of the electrode assembly 10, the electrode assembly 10 comprises a main body 11, a first tab 12, and a second tab 13, and the first tab 12 and the second tab 13 are connected to the main body 11. The first tab 12 is a part of the first electrode plate which is not coated with an active material layer, and the second tab 13 is a part of the second electrode plate which is not coated with an active material layer. Correspondingly, one of the first tab 12 and the second tab 13 is a tab with a positive polarity, and the other tab thereof is a tab with a negative polarity.

The first tab 12 and the second tab 13 may be arranged on the same side of the main body 11, or may be respectively arranged on two sides of the main body 11. For example, the first tab 12 and the second tab 13 are respectively arranged on two sides of the main body 11. In other words, the first tab 12 and the second tab 13 are respectively arranged at two ends of the electrode assembly 10. Optionally, the first tab 12 is located at one end of the electrode assembly 10 facing the end cap 30, and the second tab 13 is located at the other end of the electrode assembly 10 that faces away from the end cap 30.

The housing 20 is of a hollow structure with an opening 21, and the end cap 30 covers the opening of the housing 20 to form a sealed connection, so as to form an accommodating space for accommodating the electrode assembly 10 and an electrolyte. The housing 20 may be of a hollow structure with an open side or a hollow structure with two open sides.

The housing 20 is of a hollow structure, and has a space for accommodating the electrode assembly 10 formed therein. The housing 20 may have various shapes such as a cylinder and a cuboid. The shape of the housing 20 may be determined depending on a specific shape of the electrode assembly 10. For example, if the electrode assembly 10 is of a cylindrical structure, a cylindrical housing may be selected; and if the electrode assembly 10 is of a cuboid structure, a cuboid housing may be used.

The current collecting member 50 can connect the housing 20 to the first tab 12, such that the housing 20 and the first tab 12 have the same polarity. The housing 20 may be positively charged or negatively charged. If the first tab 12 is a positive tab, the housing 20 is positively charged; and if the first tab 12 is a negative tab, the housing 20 is negatively charged.

The end cap 30 may be connected to the housing 20 by welding, bonding, or engagement, or in other ways. For example, the end cap 30 may be connected to the housing 20 by welding.

The housing 20 and the end cap 30 may be made of the same material or different materials.

The current collecting member 50 may be directly connected to the housing 20 to implement the electrical connection between the current collecting member 50 and the housing 20. The current collecting member 50 may be indirectly connected to the housing 20 by means of other conductive structures to implement the electrical connection between the current collecting member 50 and the housing 20. For example, the current collecting member 50 may be electrically connected to the housing 20 by means of the end cap 30.

When the battery cell 7 is assembled, the current collecting member 50 may be first welded to the first tab 12. For example, the current collecting member 50 may abut against the first tab 12 first, then a surface of the current collecting member 50 that faces away from the first tab 12 is irradiated with laser light, and the laser light melts a part of the current collecting member 50 and a part of the first tab 12 to connect the current collecting member to the first tab.

The current collecting member 50 is an independently formed member, which is different from the first tab 12 formed by winding. The shape of the current collecting member 50 may be adaptively adjusted according to the shape of the end cap 30 or the shape of the housing 20. For example, the current collecting member 50 may be of a plate-like structure made of a metal material.

In the embodiment of the present application, the current collecting member 50 is provided, such that the first tab 12 is electrically connected to the housing 20 by means of the current collecting member 50, thereby omitting a process for welding the first tab 12 to the housing 20. The electrical connection between the current collecting member 50 and the housing 20 is less affected by the first tab 12, thereby reducing the risk of occurrence of micro-cracks in the housing 20, improving the sealing performance, and reducing potential safety hazards. When the current collecting member 50 is welded to the tab, even if micro-cracks occur to the current collecting member 50, the sealing performance of the battery cell 7 will not be affected.

The housing 20 itself may be used as an output electrode of the battery cell 7, thereby omitting a conventional electrode terminal to simplify the structure of the battery cell 7. When a plurality of battery cells 7 are assembled into a group, the housing 20 may be electrically connected to a busbar component, which can not only increase an overcurrent area, but also make the structural design of the busbar component more flexible.

In some embodiments, the housing 20 comprises a side wall 22 and a bottom wall 23, wherein the side wall 22 surrounds an outer side of the electrode assembly 10, and the bottom wall 23 is connected to an end of the side wall 22. The side wall 22 is of a cylindrical structure, for example, the side wall 22 may be a cylinder or a square barrel; and the bottom wall 23 is of a plate-like structure with a shape corresponding to the shape of the side wall 22. Optionally, an opening is formed in one end of the side wall 22, and the bottom wall 23 is connected to the other end of the side wall 22 that faces away from the opening.

The side wall 22 and the bottom wall 23 may be of an integrally formed structure, that is, the housing 20 is an integrally formed member. Of course, the side wall 22 and the bottom wall 23 may also be two members provided separately and then are connected together by welding, riveting, bonding, etc.

In some embodiments, the first tab 12 is wound around a central axis X of the electrode assembly 10, and the first tab 12 is generally cylindrical. The first tab 12 comprises N layer structures 121 arranged around the central axis X, wherein N is a positive integer greater than 1.

Two ends of the first tab 12 in a winding direction Y are an inner end 12a and an outer end 12b. In this embodiment, the inner end 12a of the first tab 12 is used as a reference for division of the layer structures 121.

Specifically, the inner end 12a of the first tab 12 is a head end of a first layer structure 121, and a tail end of the first layer structure 121 is aligned with the head end of the first layer structure 121 in a radial direction of the first tab 12, and the first layer structure 121 encircles the central axis X for one turn. Correspondingly, the tail end of the first layer structure 121 is the head end of the second layer structure 121. By analogy, the N layer structures 121 are connected end to end in the winding direction Y. During the division of the layer structures 121, the head end of each of the layer structures 121 is aligned with the inner end 12a of the first tab 12 in the radial direction of the first tab 12. The radial direction of the first tab 12 is perpendicular to the central axis X and passes through the central axis X.

For example, the inner end 12a and the outer end 12b of the first tab 12 are aligned with each other in the radial direction of the first tab 12, such that each layer structure 121 encircles the central axis X for one turn.

Of course, alternatively, the inner end 12a and the outer end 12b of the first tab 12 may not be aligned with each other in the radial direction of the first tab 12, such that the last layer structure 121 encircles the central axis X for less than one turn. For example, the last layer structure 121 may encircle the central axis for 1/4 turn, 1/3 turn, 1/2 turn, 2/3 turn, or 3/4 turn.

After the winding is completed, the first tab 12 is generally cylindrical, with a slit between two adjacent layer structures 121. In an embodiment of the present application, the first tab 12 may be treated to reduce the slit between the layer structures 121 and facilitate the connection between the first tab 12 and the current collecting member 50. For example, in an embodiment of the present application, the first tab 12 can be flattened, such that end regions of the first tab 12 away from the main body 11 converge together. The flattening enables a compact end surface to be formed at an end of the first tab 12 away from the main body 11, which reduces the slit between the layer structures 121 and facilitates the connection between the first tab 12 and the current collecting member 50. Alternatively, in an embodiment of the present application, a conductive material may also be filled between two adjacent turns of layer structures 121, so as to narrow the slit between the layer structures 121.

Optionally, the second tab 13 is wound around the central axis X of the electrode assembly 10 for a plurality of turns, and the second tab 13 comprises a plurality of layer structures. For example, the second tab 13 is also flattened to reduce the slit between the layer structures of the second tab 13.

In some embodiments, the housing 20 is welded to the end cap 30. The welding can not only implement the connection between the housing 20 and the end cap 30 and improve an overcurrent capability between the housing 20 and the end cap 30, but also improve the sealing performance.

In some embodiments, the housing 20 is electrically connected to the first tab 12 by means of the end cap 30 and the current collecting member 50. The end cap 30 and the housing 20 may have the same polarity. As an example, when the housing 20 needs to be positively charged, the end cap 30 may be used to electrically connect the housing 20 to a tab having a positive polarity; and when the housing 20 needs to be negatively charged, the end cap 30 may be used to electrically connect the housing 20 to a tab having a negative polarity.

In some embodiments, the current collecting member 50 is welded to the end cap 30.

For example, after the electrode assembly 10 and the current collecting member 50 are mounted inside the housing 20, the end cap 30 covers the opening of the housing 20, and the end cap 30 is welded to the current collecting member 50. For example, a surface of the end cap 30 that faces away from the current collecting member 50 is irradiated with laser light, and the laser light melts a part of the end cap 30 and a part of the current collecting member 50 to connect the current collecting member to the first tab.

Welding allows the current collecting member 50 to be electrically connected to the end cap 30. The welding between the current collecting member 50 and the end cap 30 is less affected by the first tab 12, thereby reducing the risk of occurrence of micro-cracks to the end cap 30 caused by unevenness of the first tab 12, improving the sealing performance, reducing potential safety hazards, and improving the safety.

At least a part of the current collecting member 50 abuts against the end cap 30 and is closely attached to the end cap, so as to facilitate the welding between the current collecting member 50 and the end cap 30.

Optionally, a surface of the current collecting member 50 abutting against the end cap 30 is flat. The shape of the current collecting member 50 may be adaptively adjusted according to the shape of the end cap 30, so as to ensure that the current collecting member 50 can be closely attached to the end cap 30.

In some embodiments, the housing 20 comprises a side wall 22 and a bottom wall 23 connected to the side wall 22, wherein the side wall 22 extends in a thickness direction Z of the end cap 30 and is arranged around a periphery of the electrode assembly 10, and the bottom wall 23 is provided with an electrode lead-out hole 231. The electrode assembly 10 further comprises a second tab 13, wherein the first tab 12 and the second tab 13 have opposite polarities, and the second tab 13 is arranged at an end of the electrode assembly 10 facing the bottom wall 23. The battery cell 7 further comprises an electrode terminal 40 mounted in the electrode lead-out hole 231, and the electrode terminal 40 is electrically connected to the second tab 13.

The second tab 13 may be directly electrically connected to the electrode terminal 40, or may be indirectly electrically connected to the electrode terminal 40 by means of other conductive structures.

The electrode terminal 40 is arranged on the bottom wall 23 in an insulated manner. The electrode terminal 40 and the bottom wall 23 may have different polarities, and the electrode terminal 40 and the bottom wall 23 may be respectively used as two output electrodes of the battery cell 7.

If the first tab 12 is a negative tab and the second tab 13 is a positive tab, the bottom wall 23 is a negative output electrode of the battery cell 7, and the electrode terminal 40 is a positive output electrode of the battery cell 7. If the first tab 12 is a positive tab and the second tab 13 is a negative tab, the bottom wall 23 is a positive output electrode of the battery cell 7, and the electrode terminal 40 is a negative output electrode of the battery cell 7.

The electrode terminal 40 is fixed to the bottom wall 23. The electrode 40 may be entirely fixed to an outer side of the bottom wall 23, or may extend into the housing 20 through the electrode lead-out hole 231.

The first tab 12 is located at an end of the electrode assembly 10 facing the end cap 30 to facilitate the electrical connection between the end cap 30 and the first tab 12. Correspondingly, the second tab 13 is located at an end of the electrode assembly 10 facing the bottom wall 23 to facilitate the electrical connection between the electrode terminal 40 and the second tab 13. In the embodiment of the present application, the arrangement of the first tab 12 and the second tab 13 at two ends of the electrode assembly 10 can reduce the risk of connection between the first tab 12 and the second tab 13, and increase an overcurrent area of the first tab 12 and an overcurrent area of the second tab 13.

In this embodiment, the bottom wall 23 and the electrode terminal 40 may be used as two output electrodes of the battery cell 7, which can simplify the structure of the battery cell 7 and ensure the overcurrent capability of the battery cell 7. The bottom wall 23 and the electrode terminal 40 are located at the same end of the battery cell 7, such that when a plurality of battery cells 7 are assembled into a group, and busbar components may be assembled on the same side of the battery cells 7, thereby simplifying an assembly process and improving the assembly efficiency.

In some embodiments, the bottom wall 23 and the side wall 22 are of an integrally formed structure. In this embodiment, a process for connecting the bottom wall 23 to the side wall 22 can be omitted, and resistance at a connection between the bottom wall 23 and the side wall 22 can be reduced. The housing 20 may be formed by means of a drawing process.

The electrode lead-out hole 231 in the embodiment of the present application is formed after the housing 20 is formed by drawing.

The inventors tried to roll an open end of the housing to fold over the open end of the housing inwards to forma flanging structure, and the flanging structure presses the end cap to implement the fixing of the end cap. The electrode terminal are mounted on the end cap, and the flanging structure and the electrode terminal are provided as two output electrodes of the battery cell. However, a larger size of the flanging structure indicates a higher risk of curling and creasing of the flanging structure after forming. If the flanging structure is curled and creased, a surface of the flanging structure is uneven. When the flanging structure is welded to a busbar component, the problem of poor welding will occur. Therefore, the size of the flanging structure is relatively limited, resulting in an insufficient overcurrent capability of the battery cell.

In this embodiment, the electrode lead-out hole 231 for mounting the electrode terminal 40 is formed in the bottom wall 23 by a trepanning process, so as to provide the positive output electrode and the negative output electrode at an end of the battery cell 7 that faces away from the opening. The bottom wall 23 is formed during forming of the housing 20, and the flatness of the bottom wall 23 can be ensured even after the electrode lead-out hole 231 is provided, thereby ensuring the connection strength between the bottom wall 23 and the busbar component. In addition, the flatness of the bottom wall 23 is not restricted by its own size, such that the bottom wall 23 may have a relatively large size, so as to increase the overcurrent capability of the battery cell 7.

In some embodiments, the first tab 12 is a negative tab, and a substrate material of the housing 20 is steel.

The housing 20 is electrically connected to the negative tab, i.e., the housing 20 is in a low potential state. The housing 20 made of steel is not prone to corrosion by the an electrolyte in the low potential state to reduce the safety risk.

In some embodiments, the substrate material of the housing 20 and a substrate material of the end cap 30 are the same. Optionally, both the substrate material of the housing 20 and the substrate material of the end cap 30 are steel.

In this embodiment, the substrate material of the housing 20 and the substrate material of the end cap 30 are the same, which can increase the welding strength between the housing 20 and the end cap 30 and ensure the sealing performance of the battery cell 7.

In some embodiments, the battery cell 7 is a cylindrical battery cell. Correspondingly, the electrode assembly is of a cylindrical structure, and the housing 20 is of a cylindrical hollow structure.

In some embodiments, the current collecting member 50 abuts against an end surface 12c of the first tab 12 facing the end cap 30, and the current collecting member 50 is welded to the first tab 12 to form a first welding portion W1.

The end surface 12c of the first tab 12 is relatively flat, and a connection area and connection area strength between the current collecting member 50 and the first tab 12 can be increased by welding the end surface 12c of the first tab 12 to the current collecting member 50. The first welding portion W1 can reduce contact resistance at a connection between the current collecting member 50 and the first tab 12 and increase the overcurrent capability.

In some embodiments, the electrode assembly 10 further comprises a main body 11, and the first tab 12 protrudes from an end surface 11a of the main body 11 facing the end cap 30. In the thickness direction Z of the end cap 30, a part of the first welding portion W1 formed in the first tab 12 has a size of H1, the first tab 12 protrudes from the end surface 11a by a size of H2, and H1 and H2 meet: $0.06 \leq H1/H2 \leq 0.9$.

The part of the first welding portion W1 formed in the first tab 12 may be referred to as a tab welding portion, and a part of the first welding portion W1 formed on the current collecting member 50 may be referred to as a current collecting welding portion. The tab welding portion and the current collecting welding portion are fused as one piece. As an example, a plane where an interface between the first tab 12 and the current collecting member 50 is located may be used as a boundary between the tab welding portion and the current collecting welding portion.

The first welding portion W1 extends by a certain length, and different regions of the tab welding portion may have different penetration depths in the thickness direction Z due to process errors. H1 may be a size of a region of the tab welding portion with the largest penetration depth in the thickness direction Z.

As a result of a process, different regions of the first tab 12 may protrude from the end surface 11a by not completely uniform sizes. As an example, H2 is a minimum size by which the first tab 12 protrudes from the end surface 11a.

Larger H1 indicates a higher welding strength between the first tab 12 and the current collecting member 50, more heat generated during welding, and a higher temperature of the first tab 12. Smaller H2 indicates a smaller space occupied by the first tab 12, a higher space utilization rate and energy density of the battery cell 7, and more heat conducted to the main body 11 during welding.

If H1/H2 is too large, H1 is too large and H2 is too small, excessive heat is conducted to the main body 11 during the welding, and there is a high risk that the separator of the main body 11 is burned, thus easily causing potential safety hazards.

Smaller H1 indicates a lower welding strength between the first tab 12 and the current collecting member 50, less heat generated during welding, and a lower temperature of the first tab 12. Larger H2 indicates a larger space occupied by the first tab 12, a lower space utilization rate and energy density of the battery cell 7, and less heat conducted to the main body 11 during welding.

If H1/H2 is too small, H1 is too small and H2 is too large, the welding strength between the current collecting member 50 and the first tab 12 is low, the first welding portion W1 is prone to failure when the battery cell 7 is subjected to an external impact, and the first tab 12 occupies a larger space, resulting in a relatively low energy density of the battery cell 7.

After in-depth research and a lot of experiments, the inventors have found that if $0.06 \leq H1/H2 \leq 0.9$, the welding strength between the current collecting member 50 and the first tab 12 and the risk that the separator of the main body 11 is burned can be taken into account, and the energy density of the battery cell 7 can be increased.

Optionally, a value of H1/H2 is 0.06, 0.1, 0.2, 0.3, 0.5, 0.6, 0.8, or 0.9.

In some embodiments, H1 and H2 meet: $0.1 \leq H1/H2 \leq 0.6$.

In some embodiments, H1 and H2 meet: $0.1 \leq H1/H2 \leq 0.2$.

After in-depth research and a lot of experiments, the inventors have found that if $0.1 \leq H1/H2 \leq 0.2$, the welding strength between the current collecting member 50 and the first tab 12 and the risk that the separator of the main body 11 is burned can be better taken into account, and the energy density of the battery cell 7 can be increased.

In some embodiments, a value of H1 is between 0.2 mm and 1 mm.

If H1 is too small, the welding strength between the current collecting member 50 and the first tab 12 will be insufficient. When the battery cell 7 is subjected to an external impact, the first welding portion W1 is prone to breakage, resulting in the failure of the battery cell 7. If H1 is too large, excessive heat is generated during welding, which causes the risk that the separator of the main body 11 is burned, causing potential safety hazards.

After in-depth research and a lot of experiments, the inventors have found that when the value of H1 is limited to between 0.2 mm and 1 mm, the welding strength between the current collecting member 50 and the first tab 12 and the risk that the separator of the main body 11 is burned can be taken into account.

Optionally, the value of H1 is 0.2 mm, 0.3 mm, 0.5 mm, 0.7 mm, 0.9 mm, or 1 mm.

In some embodiments, a value of H2 is 1 mm -3 mm. Optionally, H2 is 1 mm, 1.2 mm, 1.5 mm, 1.8 mm, 2 mm, 2.5 mm, 2.8 mm, or 3 mm.

In some embodiments, the electrode assembly 10 is wound in a central axis X. In a radial direction of the first tab 12, a minimum distance L1 between the first welding portion W1 and the central axis X is between 4 mm -9 mm.

The radial direction of the first tab 12 is perpendicular to the central axis X and passes through the central axis X.

As an example, a cross section of the first tab 12 perpendicular to the central axis X may be annular. The cross section of the first tab 12 perpendicular to the central axis X is not required to be absolutely annular, and a certain deviation is allowed.

The first tab 12 comprises a plurality of layer structures 121, and the layer structures 121 encircle the central axis X for one turn. A current on a layer structure 121 directly connected to the first welding portion W1 can be directly transmitted to the current collecting member 50 through the first welding portion W1. A current on a layer structure 121 not connected to the first welding portion W1 needs to be first transmitted to the layer structure 121 directly connected to the first welding portion W1 and then the current can be transmitted to the current collecting member 50 through the first welding portion W1, which leads in a difference in conductive paths between the plurality of layer structures 121 and the housing 20. If the difference is excessive, a polarization problem is easily caused.

If L1 is too small, a distance between the first welding portion W1 and the outermost layer structure 121 is too large, such that there is a an excessive difference between a current path between the outermost layer structure 121 and the housing 20 and a current path between the innermost layer structure 121 and the housing 20, resulting in an uneven current density of a first electrode plate of the electrode assembly 10 and increasing internal resistance.

After in-depth research and a lot of experiments, the inventors have found that if L1 ≥ 4 mm, the internal resistance can be reduced, and requirements of the battery cell 7 for the overcurrent capability and temperature rise are met.

Larger L1 indicates a more outward layer structure 121 directly connected to the first welding portion W1. If L1 is too large, the number of layer structures 121 connected to the first welding portion W1 is relative small, a distance between the first welding portion W1 and the innermost layer structure 121 is too large, such that there is an excessive difference between the current path between the outermost layer structure 121 and the housing 20 and the current path between the innermost layer structure 121 and the housing 20, resulting in an uneven current density of the first electrode plate and increasing the internal resistance.

After in-depth research and a lot of experiments, the inventors have found that if L1 ≤ 9 mm, the internal resistance can be reduced, and requirements of the battery cell 7 for the overcurrent capability and temperature rise are met.

Optionally, the value of L1 is 4 mm, 5 mm, 6 mm, 7 mm, 8 mm, or 9 mm. Optionally, L1 is between 5-8 mm.

In some embodiments, the electrode assembly 10 further comprises a main body 11, and the main body 11 comprises an end surface 11a facing the end cap 30 and an outer peripheral surface 11b surrounding the end surface 11a. The first tab 12 protrudes from the end surface 11a of the main body 11. In the radial direction of the first tab 12, a minimum distance L2 between the first welding portion W1 and the outer peripheral surface 11b is 1 mm -7 mm.

Smaller L2 indicates more heat conducted to the outer peripheral surface 11b during welding, and a higher risk that the main body 11 is burned. If L2 is too small, excessive heat is conducted to the main body 11 during the welding, and there is a high risk that the separator of the main body 11 is burned, thus easily causing potential safety hazards.

After in-depth research and a lot of experiments, the inventors have found that if L1 ≥ 1 mm, the risk that the main body 11 is burned can be reduced, and the safety is improved.

Larger L2 indicates a larger distance between the first welding portion W1 and the outermost layer structure 121. If L2 is too large, the distance between the first welding portion W1 and the outermost layer structure 121 is too large, such that there is an excessive difference between a current path between the outermost layer structure 121 and the housing 20 and a current path between the innermost layer structure 121 and the housing 20, resulting in a non-uniform current density of a first electrode plate of the electrode assembly 10 and increasing internal resistance.

After in-depth research and a lot of experiments, the inventors have found that if L2 ≤ 9 mm, the internal resistance can be reduced, and requirements of the battery cell 7 for the overcurrent capability and temperature rise are met.

In some embodiments, the outer peripheral surface 11b is a cylindrical surface.

In some embodiments, the separator of the main body 11 forms the outer peripheral surface 11b.

In some embodiments, the electrode assembly 10 is wound along a central axis X, the first tab 12 comprises N layer structures 121 arranged around the central axis X, and an extension direction of the central axis X is parallel to the thickness direction Z of the end cap 30. The first tab 12 is composed of a first annular portion 122 and a second annular portion 123 surrounding an outer side of the first annular portion 122, N1 layer structures 121 are provided in the first annular portion 122, and N2 layer structures 121 are provided in the second annular portion 123, wherein N = N1 + N2, a value of |N1 - N21 is less than or equal to 2, and N1 and N2 are positive integers. The first annular portion 122 is welded to the current collecting member 50 to form a first part W11, the second annular portion 123 is welded to the current collecting member 50 to form a second part W12 connected to the first part W11, and the first welding portion W1 is composed of the first part W11 and the second part W12.

Each layer structure 121 in the first annular portion 122 encircles the central axis X for one turn. A connection between the first annular portion 122 and the second annular portion 123 is radially aligned with the inner end 12a of the first tab 12.

Electrons in a region of the electrode assembly 10 that corresponds to the first annular portion 122 can move along a first current path formed by the first annular portion 122, the first part W11, the current collecting member 50, and the housing 20, and electrons in a region of the electrode assembly 10 that corresponds to the second annular portion 123 can move along a second current path formed by the second annular portion 123, the second part W12, the current collecting member 50, and the housing 20. In addition, a boundary between the first annular portion 122 and the second annular portion 123 is substantially located in a middle region of the first tab 12 in the radial direction.

In this embodiment, the boundary between the first annular portion 122 and the second annular portion 123 is substantially located in the middle region of the first tab 12 in the radial direction, and some layer structures 121 in the middle region of the first tab 12 are welded to the current collecting member 50 to form a part of the first welding portion W1, which can reduce the difference between the first current path and the second current path to a certain extent, so as to improve the uniformity of the current density, reduce the internal resistance, and increase the overcurrent capability.

In some embodiments, N3 continuous layer structures 121 in the first annular portion 122 that are close to the second annular portion 123 are welded to the current collecting member 50 to form the first part W11, N4 continuous layer structures 121 in the second annular portion 123 that are close to the first annular portion 122 are welded to the current collecting member 50 to form the second part W12, and the N3 continuous layer structures 121 and the N4 continuous layer structures 121 are continuously arranged, wherein $N4 > N3 \geq 1$, and N3 and N4 are positive integers.

Because the second annular portion 123 surrounds the outer side of the first annular portion 122, a perimeter of each of the layer structures 121 in the second annular portion 123 is greater than that of each of the layer structures 121 in the first annular portion 122, and the electrons in the region of the electrode assembly 10 that corresponds to the second annular portion 123 have a relatively long transmission path between the layer structures 121 in the second annular portion 123. In this embodiment, N4 > N3, such that the layer structures 121 connected to the second part W12 can be increased to reduce the transmission of the electrons between the layer structures 121 in the second annular portion 123, thereby shortening the second current path and further reducing the difference between the first current path and the second current path, so as to improve the uniformity of the current density, reduce the internal resistance, and increase the overcurrent capability.

In some embodiments, M continuous layer structures 121 of all layer structures 121 are welded to the current collecting member 50 to form the first welding portion W1, wherein $1/3 \leq M/N \leq 1/2$, $M \geq 2$, and M is a positive integer.

Optionally, M = N3 + N4.

A greater value of M/N indicates smaller internal resistance of the first tab 12, a larger area of the first welding portion W1, and a higher overcurrent capability between the first tab 12 and the current collecting member 50. However, when the area of the current collecting member 50 is constant, a greater value of M/N indicates a smaller area of the current collecting member 50 that can be welded to another component (for example, a smaller welding area between the current collecting member 50 and the end cap 30), and a lower overcurrent capability between the current collecting member 50 and the housing 20.

After in-depth research and a lot of experiments, the inventors have found that the value of M/N is limited to between 1/3 and 1/2, so as to balance the overcurrent capability between the first tab 12 and the current collecting member 50 and the overcurrent capability between the current collecting member 50 and the housing 20, and optimize the overcurrent capability of the battery cell 7.

In some embodiments, a plurality of first welding portions W1 are provided, and the plurality of first welding portions W1 are spaced apart in a circumferential direction of the first tab 12. Of course, the present application is not limited thereto. In some other embodiments, one first welding portion W1 may be provided. For example, the first welding portion W1 may be annular, spiral or linear.

In some embodiments, in the thickness direction Z of the end cap 30, the first welding portion W1 is spaced apart from the end cap 30.

In the embodiment of the present application, the first welding portion W1 is spaced apart from the end cap 30, so as to reduce the risk that the first welding portion W1 crushes the end cap 30, and improve the sealing performance and safety.

In some embodiments, the current collecting member 50 is welded to the end cap 30 to form a second welding portion W2. For example, a part of the current collecting member 50 is configured to abut against and be welded to the end cap 30 to form the second welding portion W2.

In some embodiments, a projection of the first welding portion W1 in the thickness direction Z of the end cap 30 and a projection of the second welding portion W2 in the thickness direction Z of the end cap 30 do not overlap.

In this embodiment, two different parts of the current collecting member 50 are respectively welded to the end cap 30 and the first tab 12, such that the projection of the second welding portion W2 in the thickness direction Z of the end cap 30 and the projection of the first welding portion W1 in the thickness direction Z of the end cap 30 would not overlap.

The second welding portion W2 and the first welding portion W1 each are of a structure formed after a material is subjected to melting, cooling and solidification, etc., and surfaces of the second welding portion and the first welding portion are uneven.

During assembly of the battery cell 7, the current collecting member 50 first abuts against and is welded to the first tab 12 to form the first welding portion W1, and then an end cap 30 is welded to the current collecting member 50 to form the second welding portion W2. If the projection of the second welding portion W2 in the thickness direction Z of the end cap 30 and the projection of the first welding portion W1 in the thickness direction Z of the end cap 30 overlap, when the end cap 30 is welded to the current collecting member 50, a portion of the end cap 30 for welding to the current collecting member 50 needs to abut against the first welding portion W1. Because the surface of the first welding portion W1 is uneven, if the part of the end cap 30 for welding to the current collecting member 50 abuts against the first welding portion W1, it is difficult to closely attach the end cap 30 to the first welding portion W1, which may cause poor welding, affect the connection strength between the end cap 30 and the current collecting member 50, and cause the risk of occurrence of micro-cracks in the end cap 30.

In this embodiment, if the projection of the second welding portion W2 in the thickness direction Z of the end cap 30 and the projection of the first welding portion W1 in the thickness direction Z of the end cap 30 do not overlap, the influences from the first welding portion W1 during welding of the end cap 30 to the current collecting member 50 can be reduced, and the reliability of welding between the end cap 30 and the current collecting member 50 is improved.

In some embodiments, the end cap 30 comprises a cap body 31 and a first protrusion 32 protruding from an inner surface 311 of the cap body 31 in a direction facing the first tab 12.

The cap body 31 is of a plate-like structure, and has an inner surface 311 and an outer surface 312 that are arranged opposite to each other in the thickness direction Z. The inner surface 311 of the cap body 31 faces the electrode assembly 10. Optionally, the inner surface 311 of the cap body 31 and the outer surface 312 of the cap body 31 each are planar and arranged in parallel.

The first protrusion 32 protrudes in a direction facing the electrode assembly 10 relative to the inner surface 311 of the cap body 31, such that at least a part of the first protrusion 32 protrudes from the inner surface 311 of the cap body 31. In this embodiment, there is no limitation on the extent to which the first protrusion 32 protrudes from the inner surface 311 of the cap body 31.

The first protrusion 32 is connected to the cap body 31. For example, the first protrusion 32 is of an annular structure surrounding an outer side of the cap body 31. Of course, alternatively, the cap body 31 may also surround an outer side of the first protrusion 32.

In some embodiments, the current collecting member 50 may be welded to the first protrusion 32 to form the second welding portion W2. In some other embodiments, the current collecting member 50 may be welded to the cap body 31 to form the second welding portion W2.

In some embodiments, the end cap 30 comprises a cap body 31 and a first protrusion 32 protruding from an inner surface 311 of the cap body 31 in a direction facing the first tab 12. The first protrusion 32 is configured to abut against the current collecting member 50, and a first avoidance gap G1 for avoiding the first welding portion W1 is formed between the current collecting member 50 and the cap body 31.

A top end surface of the first protrusion 32 abuts against and supports the current collecting member 50 to spaced apart at least the cap body 31 from the current collecting member 50 in the thickness direction Z.

The projection of the first welding portion W1 in the thickness direction Z at least partially overlaps a projection of the cap body 31 in the thickness direction Z. Optionally, the projection of the first welding portion W1 in the thickness direction Z is located in the projection of the cap body 31 in the thickness direction Z.

In this embodiment, the first avoidance gap G1 for avoiding the first welding portion W1 is formed to prevent the first welding portion W1 from abutting against the cap body 31, and reduce the risk that the first welding portion W1 crushes the cap body 31. If the first welding portion W1 abuts against the cap body 31, over-positioning is caused between the end cap 30 and the current collecting member 50, such that the first welding portion W1 interferes with the abutment between the first protrusion 32 and the current collecting member 50. In this embodiment, the first avoidance gap G1 is provided to prevent the first welding portion W1 from interfering with the abutment between the first protrusion 32 and the current collecting member 50, and to ensure the connection strength between the first protrusion 32 and the current collecting member 50.

In some embodiments, a first recess 33 recessed from the outer surface 312 of the cap body 31 in the direction facing the electrode assembly 10 is formed on the end cap 30 at a position corresponding to the first protrusion 32.

During assembly of the end cap 30 and the current collecting member 50, laser light may be applied to a bottom surface of the first recess 33 to weld the first protrusion 32 to the current collecting member 50 from outside. In this embodiment, the thickness of the first protrusion 32 is reduced by providing the first recess 33, which can reduce welding power required for welding the first protrusion 32 to the current collecting member 50, reduce generated heat, and reduce the risk that another member is burned.

The first protrusion 32 is of a solid structure with a certain thickness. For example, the first protrusion 32 is of a thin-walled structure. The first recess 33 is a cavity without a solid structure.

The first recess 33 can reduce the strength of the first protrusion 32 and improve an elastic deformation capability of the first protrusion 32. In this way, during abutment of the first protrusion 32 against the current collecting member 50, the first protrusion 32 can release a stress by means of deformation and reduce an impact force and reduce the risk that the current collecting member 50 and the first tab 12 are crushed.

In some embodiments, the bottom surface of the first recess 33 is closer to the first tab 12 than the inner surface 311 of the cap body 31.

The first recess 33 and the first protrusion 32 may be formed by stamping the end cap 30. A larger depth of the first recess 33 in the thickness direction Z indicates a greater extent to which the first protrusion 32 protrudes from the inner surface 311 of the cap body 31, and a larger first avoidance gap G1.

In the embodiment of the present application, the extent to which the first protrusion 32 protrudes from the inner surface 311 of the cap body 31 can be ensured, so as to more effectively support the current collecting member 50 and reduce the risk that the first welding portion W1 comes into contact with the end cap 30. In addition, according to the embodiment of the present application, the recessed extent of the first recess 33 is further ensured provided that the protruding extent of the first protrusion 32 is ensured, so as to improve the elastic deformation capability of the first protrusion 32 and reduce the risk that the first protrusion 32 crushes the current collecting member 50 and the first tab 12 during assembly.

In some embodiments, the cap body 31 surrounds the outer side of the first protrusion 32, and the second welding portion W2 is arranged on an inner side of the first welding portion W1.

In this embodiment, both the inner side and the outer side are positions relative to the central axis X. The first protrusion 32 is closer to the central axis X than the cap body 31, and the second welding portion W2 is closer to the central axis X than the first welding portion W1.

In some embodiments, a first recess 33 recessed from the outer surface 312 of the cap body 31 in the direction facing the electrode assembly 10 is formed on the end cap 30 at a position corresponding to the first protrusion 32. The bottom surface of the first recess 33 is provided with a groove 34, and the bottom of the groove 34 is configured to be welded to the current collecting member 50 to form the second welding portion W2.

The groove 34 is recessed from the bottom surface of the first recess 33 in the direction facing the electrode assembly 10. A part of the first protrusion 32 that is located between the bottom surface of the groove 34 and the top end surface of the first protrusion 32 forms a connection portion, and the connection portion is configured to be welded to the current collecting member 50 to form the second welding portion W2.

In this embodiment, the provision of the first recess 33 and the groove 34 reduces the thickness of the connection portion of the first protrusion 32, which can reduce the welding power required for welding the connection portion to the current collecting member 50, reduce generated heat, and reduce the risk that another member (such as the separator) is burned.

In some embodiments, the end cap 30 further comprises a second protrusion 35 surrounding an outer side of the cap body 31. The second protrusion 35 protrudes from the inner surface 311 of the cap body 31 in the direction facing the first tab 12, and the second protrusion 35 is configured to support the first tab 12.

The second protrusion 35 is of an annular structure surrounding the outer side of the cap body 31. In the radial direction, the second protrusion 35 is closer to the side wall 22 than the cap body 31.

The second protrusion 35 may directly support the first tab 12, or may support the first tab 12 by means of other members (such as the current collecting member 50).

In this embodiment, the second protrusion 35 may support the first tab 12 to reduce the waggling of the electrode assembly 10 when the battery cell 7 vibrates, and improve the stability of the electrode assembly 10.

In some embodiments, the second protrusion 35 directly abuts against and supports the first tab 12.

In some embodiments, the second protrusion 35 is spaced apart from the current collecting member 50 to prevent the second protrusion 35 from interfering with the abutment between the current collecting member 50 and the first protrusion 32, and to ensure that the first protrusion 32 is closely attached to the current collecting member 50.

Optionally, the second protrusion 35 surrounds an outer side of the current collecting member 50.

In some embodiments, an outer side surface 351 of the second protrusion abuts against the inner surface of the housing 20 and is configured to be welded to the housing 20 to close the opening.

The outer side surface 351 of the second protrusion is a surface of the second protrusion 35 that faces the side wall 22 of the housing 20. The outer side surface 351 of the second protrusion is a columnar surface, and optionally, the outer side surface 351 of the second protrusion is a cylindrical surface.

A part of the second protrusion 35 extending into the housing 20 may be in interference fit, transition fit or clearance fit with the housing 20. Optionally, the part of the second protrusion 35 extending into the housing 20 may be in interference fit with the housing 20, and the interference fit can increase the connection strength between the housing 20 and the end cap 30 and improve the sealing performance.

Optionally, the second protrusion 35 is connected to the side wall 22 of the housing 20 by laser welding. During welding, laser light is irradiated to a junction between the second protrusion 35 and the side wall 22, and the laser light melts at least a part of the outer side surface 351 of the second protrusion and a part of the inner surface of the housing 20 to connect the second protrusion to the housing. The outer side surface 351 of the second protrusion abuts against the inner surface of the housing 20, which can reduce the risk that the laser light is emitted into the housing 20 and burns the electrode assembly 10.

Alternatively, the laser light may also be irradiated to an outer surface of the side wall 22 that faces away from the second protrusion 35.

In this embodiment, the welding can implement sealing, reduce the risk of electrolyte leakage, and improve the connection strength and overcurrent capability between the second protrusion 35 and the housing 20.

In some embodiments, a second recess 36 recessed from the outer surface 312 of the cap body 31 in the direction facing the electrode assembly 10 is formed on the end cap 30 at a position corresponding to the second protrusion 35.

The second recess 36 can reduce the strength of the second protrusion 35 and improve the elasticity of the second protrusion 35. In this way, during welding of the second protrusion 35 to the housing 20, the second protrusion 35 may release a welding stress by means of deformation, thereby reducing the risk of deformation and cracking of a welded region and improving the sealing performance.

In some embodiments, a bottom surface of the second recess 36 is closer to the first tab 12 than the inner surface 311 of the cap body 31.

The second recess 36 and the second protrusion 35 may be formed by stamping the end cap 30. A larger depth of the second recess 36 in the thickness direction Z indicates a greater extent to which the second protrusion 35 protrudes from the inner surface 311 of the cap body 31.

In the embodiment of the present application, the extent to which the second protrusion 35 protrudes from the inner surface 311 of the cap body 31 can be ensured, so as to support the first tab 12. In addition, according to the embodiment of the present application, the recessed extent of the second recess 36 is further ensured provided that the protruding extent of the second protrusion 35 is ensured, so as to improve the elasticity of the second protrusion 35 and enable the second protrusion 35 to release the welding stress by means of deformation.

In some embodiments, the cap body 31 is provided with a weakened portion V, and the weakened portion V is configured to rupture when an internal pressure of the battery cell 7 reaches a threshold, so as to release the internal pressure.

The threshold design varies according to different design requirements. The threshold may depend on the material(s) of one or more of the positive electrode plate, the negative electrode plate, the electrolyte and the separator in the battery cell 7.

After the weakened portion V ruptures, a channel for relief of the internal pressure is formed. After the weakened portion V ruptures, a high-temperature and high-pressure material inside the battery cell 7 are outwardly discharged as an emission from a ruptured part. In this way, the pressure of the battery cell 7 can be relieved in a controllable manner, thereby avoiding the occurrence of potentially more serious accidents. The emissions from the battery cell 7 described in the present application include, but are not limited to: an electrolyte, dissolved or split positive and negative electrode plates, fragments of a separator, a high-temperature and high-pressure gas generated by a reaction, flames, etc.

In this embodiment, the weakened portion V is provided on the cap body 31 to release the internal pressure when the battery cell 7 is subjected to thermal runaway, thereby improving the safety performance. In this embodiment, the first avoidance gap G1 is formed between the current collecting member 50 and the cap body 31, so as to reduce the risk that the current collecting member 50 blocks an exhaust channel when the weakened portion V ruptures, ensure smooth exhaust, and reduce the safety risk.

In some embodiments, the current collecting member 50 is of a flat plate structure. The flat plate-like current collecting member 50 is easier to mold. The entire flat plate-shaped current collecting member 50 may be in contact with the first tab 12, thereby increasing an overcurrent area, allowing the current collecting member 50 to support the first tab 12 more evenly, and reducing the risk of shifting and dislocation of the electrode plates of the electrode assembly 10 in the thickness direction Z. The flat plate-like current collecting member 50 can also be closely attached to the first protrusion 32, so as to reduce the risk of occurrence of micro-cracks in the first protrusion 32 during welding and improve the sealing performance and safety.

In some embodiments, the first protrusion 32 supports the first tab 12 by means of the current collecting member 50.

In this embodiment, the first protrusion 32 supports the first tab 12 by means of the current collecting member 50 to reduce the waggling of the electrode assembly 10 when the battery cell 7 vibrates, and improve the stability of the electrode assembly 10. The current collecting member 50 can support the electrode assembly 10 by means of the first tab 12 to reduce the risk of shifting and dislocation of the electrode plates of the electrode assembly 10 in the thickness direction Z.

The first protrusion 32 supports the middle region of the first tab 12 by means of the current collecting member 50, and the second protrusion 35 supports an edge region of the first tab 12, which can improve the stress uniformity of the first tab 12 and reduce the risk of shifting and dislocation of the electrode plates of the electrode assembly 10 in the thickness direction Z.

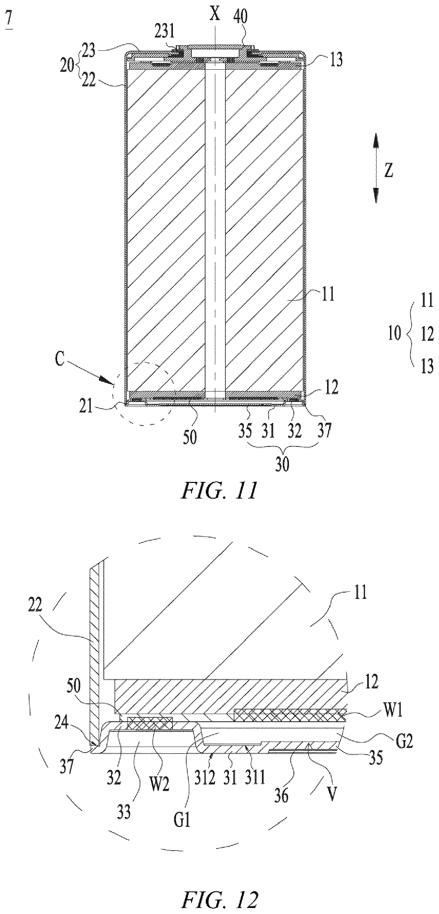

FIG. 10 is a schematic cross-sectional view of a battery cell according to some other embodiments of the present application; FIG. 11 is a schematic cross-sectional view of a battery cell according to some still other embodiments of the present application; FIG. 12 is a schematic enlarged view of the battery cell shown in FIG. 11 at circle C.

As shown in FIG. 10, in some embodiments, the first protrusion 32 surrounds the outer side of the cap body 31, and the second welding portion W2 is arranged on an outer side of the first welding portion W1.

In this embodiment, the outer side is a position relative to the central axis X. The cap body 31 is closer to the central axis X than the first protrusion 32, and the first welding portion W1 is closer to the central axis X than the second welding portion W2.

In some embodiments, the outer side surface 321 of the first protrusion abuts against the inner surface of the housing 20 and is configured to be welded to the housing 20 to close the opening.

The outer side surface 321 of the first protrusion is a surface of the first protrusion 32 that faces the side wall 22 of the housing 20. The outer side surface 321 of the first protrusion is a columnar surface, and optionally, the outer side surface 321 of the first protrusion is a cylindrical surface.

A part of the first protrusion 32 extending into the housing 20 may be in interference fit, transition fit or clearance fit with the housing 20. Optionally, the part of the first protrusion 32 extending into the housing 20 may be in interference fit with the housing 20, and the interference fit can increase the connection strength between the housing 20 and the end cap 30 and improve the sealing performance.

Optionally, the first protrusion 32 is connected to the side wall 22 of the housing 20 by laser welding. During welding, laser light is irradiated to a junction between the first protrusion 32 and the side wall 22, and the laser light melts at least a part of the outer side surface 321 of the first protrusion and a part of the inner surface of the housing 20 to connect the first protrusion to the housing. The outer side surface 321 of the first protrusion abuts against the inner surface of the housing 20, which can reduce the risk that the laser light is emitted into the housing 20 and burns the electrode assembly 10.

Alternatively, the laser light may also be irradiated to an outer surface of the side wall 22 that faces away from the first protrusion 32.

In this embodiment, the welding can implement sealing, reduce the risk of electrolyte leakage, and improve the connection strength and overcurrent capability between the housing 20 and the first protrusion 32.

As shown in FIGS. 11 and 12, in some embodiments, the end cap 30 further comprises an extension 37 surrounding the outer side of the first protrusion 32, and a surface of the extension 37 that faces the first tab 12 abuts against and is welded to an end surface 24 of the housing 20 surrounding the opening 21, so as to close the opening.

The extension 37 comprises an inner surface and an outer surface that are arranged opposite to each other in the thickness direction Z, and the inner surface of the extension 37 faces the first tab 12. Optionally, the extension 37 is of an annular plate-like structure, and both of the inner surface of the extension 37 and the outer surface of the extension 37 are planar.

The extension 37 and the housing 20 are arranged in the thickness direction Z, and the inner surface of the extension 37 may be arranged in parallel with the end surface 24 of the housing 20.

Optionally, during welding, laser light is irradiated to a junction between the end surface 24 of the housing 20 and the inner surface of the extension portion 37; and after welding, at least a part of the inner surface of the extension 37 and at least a part of the end surface 24 of the housing 20 are melted and connected together.

In this embodiment, when the end cap 30 is assembled to the housing 20, the end surface 24 of the housing 20 can achieve a limiting effect in the thickness direction Z, thereby reducing the risk that the end cap 30 is excessively inserted into the housing 20, and improving the assembly efficiency.

In some embodiments, the end cap 30 further comprises a second protrusion 35, the cap body 31 surrounds an outer side of the second protrusion 35, and the second protrusion 35 protrudes from the inner surface 311 of the cap body 31 in the direction facing the first tab 12. A second recess 36 recessed from the outer surface 312 of the cap body 31 in the direction facing the electrode assembly 10 is formed on the end cap 30 at a position corresponding to the second protrusion 35.

The second protrusion 35 and the second recess 36 may be formed by stamping the end cap 30.

The battery cell 7 may release a small amount of gas during a normal cycle, and the gas may increase the internal pressure of the battery cell 7, thereby causing the risk of deformation of the end cap 30. In this embodiment, the provision of the second protrusion 35 and the second recess 36 in the middle of the end cap 30 can increase the strength of the end cap 30 and reduce the deformation of the end cap 30.

In some embodiments, a region of the second protrusion 35 opposite to the bottom surface of the second recess 36 is provided with a weakened portion V, and the weakened portion V is configured to rupture when the internal pressure of the battery cell 7 reaches a threshold, so as to release the internal pressure.

In this embodiment, the weakened portion V is provided on the second protrusion 35 to release the internal pressure when the battery cell 7 is subjected to thermal runaway, thereby improving the safety performance. The weakened portion V is formed in the region of the second protrusion 35 opposite to the bottom surface of the second recess 36, which can increase a distance between the weakened portion V and another external member and reduce the risk that the weakened portion V is crushed by the external member.

In some embodiments, a second avoidance gap G2 is formed between the second protrusion 35 and the current collecting member 50.

The first protrusion 32 protrudes from the inner surface 311 of the cap body 31 to a greater extent than the extent to which the second protrusion 35 protrudes from the inner surface 311 of the cap body 31, such that the first protrusion 32 can support the current collecting member 50 to form the second avoidance gap G2 between the second protrusion 35 and the current collecting member 50.

In this embodiment, the second avoidance gap G2 is formed between the second protrusion 35 and the current collecting member 50, so as to reduce the risk that the current collecting member 50 blocks the exhaust channel when the weakened portion V ruptures, ensure smooth exhaust, and reduce the safety risk.

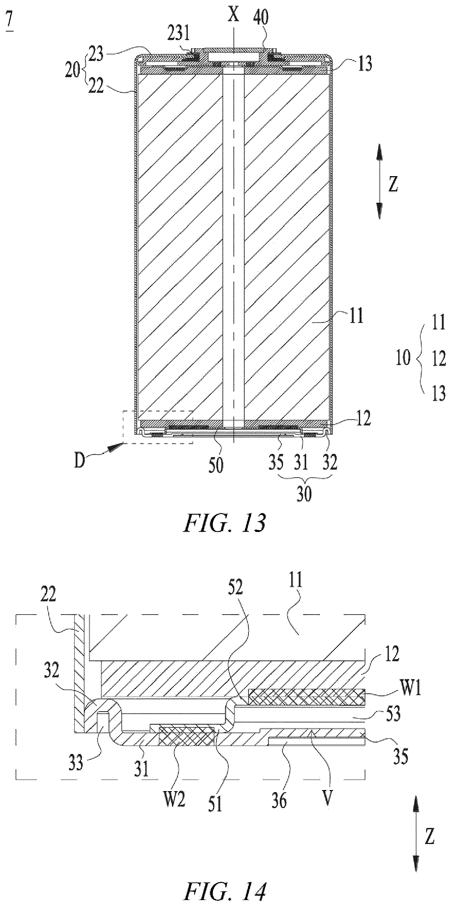

FIG. 13 is a schematic cross-sectional view of a battery cell provided in some yet other embodiments of the present application, and FIG. 14 is a schematic enlarged view of the battery cell shown in FIG. 13 at box D.

As shown in FIGS. 13 and 14, in some embodiments, the current collecting member 50 comprises a first current collecting portion 51 and a second current collecting portion 52, the first current collecting portion 51 is connected to the end cap 30, and the second current collecting portion 52 protrudes from a surface of the first current collecting portion 51 facing the electrode assembly 10. The current collecting member 50 is provided with an avoidance recess 53, and the avoidance recess 53 is located on a side of the second current collecting portion 52 that faces away from the electrode assembly 10. A region of the second current collecting portion 52 that corresponds to a bottom surface of the avoidance recess 53 is welded to the first tab 12 to form a first welding portion W1.

The end cap 30 may be in a form of a flat plate or have another shape.

In this embodiment, the avoidance recess 53 for avoiding the first welding portion W1 is provided to prevent the first welding portion W1 from interfering with the connection between the first current collecting portion 51 and the end cap 30, ensure the connection strength between the first current collecting portion 51 and the end cap 30, and reduce the risk that the first welding portion W1 crushes the end cap 30. The avoidance recess 53 can reduce the thickness of the second current collecting portion 52, so as to reduce welding power required for welding the second current collecting portion 52 to the first tab 12 and reduce generated heat and the risk that another member (such as a separator) is burned.

In some embodiments, the first current collecting portion 51 is configured to abut against and be welded to the end cap 30 to form a second welding portion W2.

In some embodiments, the first current collecting portion 51 is of a flat plate structure surrounding an outer side of the second current collecting portion 52.

In some embodiments, the end cap 30 comprises a cap body 31 and a first protrusion 32; wherein the cap body 31 is configured to be welded to the first current collecting portion 51 to form the second welding portion W2; and the first protrusion 32 surrounds an outer side of the cap body 31 and protrudes from an inner surface 311 of the cap body 31 in a direction facing the first tab 12, and the first protrusion 32 is configured to abut against the first tab 12 to support the first tab 12.

In this embodiment, the second current collecting portion 52 supports a middle region of the first tab 12, and the first protrusion 32 supports an edge region of the first tab 12, which can improve the stress uniformity of the first tab 12 and reduce the risk of shifting and dislocation of the electrode plates of the electrode assembly 10 in the thickness direction Z.

In some embodiments, a first recess 33 recessed from the outer surface 312 of the cap body 31 in the direction facing the electrode assembly 10 is formed on the end cap 30 at a position corresponding to the first protrusion 32, and a bottom surface of the first recess 33 is closer to the first tab 12 than the inner surface 311 of the cap body 31.

The first recess 33 and the first protrusion 32 may be formed by stamping the end cap 30. A larger depth of the first recess 33 in the thickness direction Z indicates a greater extent to which the first protrusion 32 protrudes from the inner surface 311 of the cap body 31.

In the embodiment of the present application, the extent to which the first protrusion 32 protrudes from the inner surface 311 of the cap body 31 can be ensured, so as to support the first tab 12. In addition, according to the embodiment of the present application, the recessed extent of the first recess 33 is further ensured provided that the protruding extent of the first protrusion 32 is ensured, so as to improve the elasticity of the first protrusion 32, reduce an impact force when the first protrusion 32 abuts against the first tab 12, and reduce the risk that the first tab 12 is crushed.

In some embodiments, an outer side surface of the first protrusion abuts against the inner surface of the housing 20 and is configured to be welded to the housing 20 to close the opening.

The outer side surface of the first protrusion is a surface of the first protrusion 32 that faces the side wall 22 of the housing 20. The outer side surface of the first protrusion is a columnar surface, and optionally, the outer side surface of the first protrusion is a cylindrical surface.

A part of the first protrusion 32 extending into the housing 20 may be in interference fit, transition fit or clearance fit with the housing 20. Optionally, the part of the first protrusion 32 extending into the housing 20 may be in interference fit with the housing 20, and the interference fit can increase the connection strength between the housing 20 and the end cap 30 and improve the sealing performance.

Optionally, the first protrusion 32 is connected to the side wall 22 of the housing 20 by laser welding. During welding, laser light is irradiated to a junction between the first protrusion 32 and the side wall 22, and the laser light melts at least a part of the outer side surface 321 of the first protrusion and a part of the inner surface of the housing 20 to connect the first protrusion to the housing. The outer side surface 321 of the first protrusion abuts against the inner surface of the housing 20, which can reduce the risk that the laser light is emitted into the housing 20 and burns the electrode assembly 10.

Alternatively, the laser light may also be irradiated to an outer surface of the side wall 22 that faces away from the first protrusion 32.

In this embodiment, the welding can implement sealing, reduce the risk of electrolyte leakage, and improve the connection strength and overcurrent capability between the first protrusion 32 and the housing 20.

In some embodiments, the end cap 30 further comprises a second protrusion 35, the cap body 31 surrounds an outer side of the second protrusion 35, and the second protrusion 35 protrudes from the inner surface of the cap body 31 in the direction facing the first tab 12 and extends into the avoidance recess 53. A second recess 36 recessed from the outer surface of the cap body 31 in the direction facing the electrode assembly 10 is formed on the end cap 30 at a position corresponding to the second protrusion 35.

The second protrusion 35 and the second recess 36 may be formed by stamping the end cap 30.

The battery cell 7 may release a small amount of gas during a normal cycle, and the gas may increase the internal pressure of the battery cell 7, thereby causing the risk of deformation of the end cap 30. In this embodiment, the provision of the second protrusion 35 and the second recess 36 in the middle of the end cap 30 can increase the strength of the end cap 30 and reduce the deformation of the end cap 30.

In some embodiments, a region of the second protrusion 35 opposite to the bottom surface of the second recess 36 is provided with a weakened portion V, and the weakened portion V is configured to rupture when the internal pressure of the battery cell 7 reaches a threshold, so as to release the internal pressure. The avoidance recess 53 is further configured to separate the second current collecting portion 52 from the weakened portion V.

In this embodiment, the weakened portion V is provided on the second protrusion 35 to release the internal pressure when the battery cell 7 is subjected to thermal runaway, thereby improving the safety performance. The weakened portion V is formed in the region of the second protrusion 35 opposite to the bottom surface of the second recess 36, which can increase a distance between the weakened portion V and another external member and reduce the risk that the weakened portion V is crushed by the external member.

The avoidance recess 53 in this embodiment can reduce the risk that the current collecting member 50 blocks the exhaust channel when the weakened portion V ruptures, ensure smooth exhaust, and reduce the safety risk.

In some embodiments, the end cap 30 further comprises an extension (not shown) surrounding the outer side of the first protrusion 32, and a surface of the extension that faces the first tab 12 abuts against and is welded to an end surface of the housing 20 surrounding the opening, so as to close the opening.

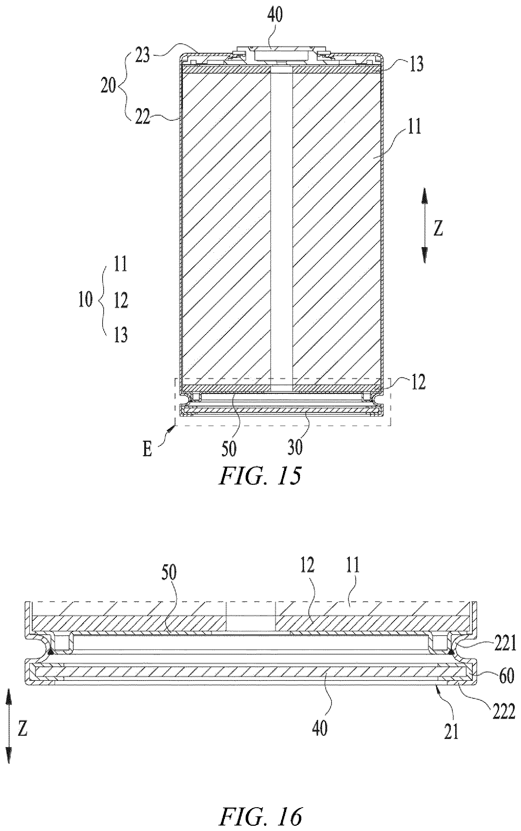

FIG. 15 is a schematic cross-sectional view of a battery cell provided in some still yet other embodiments of the present application, and FIG. 16 is a schematic enlarged view of the battery cell shown in FIG. 15 at box E.

As shown in FIGS. 15 and 16, in some embodiments, the current collecting member 50 is directly connected to the housing 20.

For example, the current collecting member 50 may be directly connected to the housing 20 by means of welding or riveting, or in other ways.

The direct connection between the current collecting member 50 and the housing 20 can shorten a conductive path between the current collecting member 50 and the housing 20, and increase the overcurrent capability of the battery cell 7.

In some embodiments, the current collecting member 50 is welded to the housing 20. Welding can reduce contact resistance between the current collecting member 50 and the housing 20, increase the overcurrent capability between the current collecting member 50 and the housing 20, and increase the connection strength between the current collecting member 50 and the housing 20.

In some embodiments, the current collecting member 50 is spaced apart from the end cap 30, so as to reduce an acting force on the end cap 30 when the battery cell 7 is subjected to an external impact, reduce the risk of cracking of the end cap 30, and improve the safety and sealing performance.

In some embodiments, the end cap 30 is connected to the side wall 22 in a sealed manner by means of a seal 60. The provision of the seal 60 between the end cap 30 and the side wall 22 can improve the sealing performance of the battery cell 7.

For example, a connection between the end cap 30 and the side wall 22 may be a region where the end cap 30 and the side wall 22 jointly clamp the seal 60.

In some embodiments, the side wall 22 comprises a supporting portion 221 and a flanging portion 222, wherein the supporting portion 221 and the flanging portion 222 are arranged in the thickness direction Z. In the thickness direction Z of the end cap 30, at least a part of the end cap 30 is clamped between the supporting portion 221 and the flanging portion 222, so as to fix the end cap 30.

In some embodiments, the seal 60 encloses an outer periphery of the end cap 30. In the thickness direction Z of the end cap 30, a part of the seal 60 is clamped between the supporting portion 221 and the end cap 30, and the other part of the seal is clamped between the flanging portion 222 and the end cap 30, thereby sealing the opening of the side wall 22.

In some embodiments, after the electrode assembly 10 is placed in the housing 20, the side wall 22 is rolled from outside to form an inwardly protruding supporting portion 221 on the side wall 22. After the supporting portion 221 is formed, the end cap 30 and the seal 60 enclose the end cap 30 are placed into the side wall 22, and then an end of the side wall 22 is bent by means of a flanging process, such that the side wall 22 forms the flanging portion 222.

In some embodiments, the current collecting member 50 is welded to the supporting portion 221 of the side wall 22, so as to electrically connect the side wall 22 to the first tab 12.

In some embodiments, the seal 60 insulates and isolates the end cap 30 from the side wall 22.

According to some embodiments of the present application, a battery is further provided, comprising a plurality of battery cells according to any one of the above embodiments.

According to some embodiments of the present application, a power consuming device is further provided, comprising a battery according to any one of the above embodiments, wherein the battery is configured to provide electric energy for the power consuming device. The power consuming device may be any one of the above devices or systems using battery cells.

Referring to FIGS. 4-6, an embodiment of the present application provides a cylindrical battery cell 7, wherein the battery cell 7 comprises a housing 20, an electrode assembly 10, an end cap 30, an electrode terminal 40, and a current collecting member 50. The housing 20 is provided with an opening. The electrode assembly 10 is accommodated inside the housing 20. The end cap 30 covers the opening.

The housing 20 comprises a side wall 22 and a bottom wall 23 that are integrally formed, wherein the side wall 22 surrounds an outer side of the electrode assembly 10, and the bottom wall 23 is connected to an end of the side wall 22. The side wall 22 is formed with an opening at an end far away from the bottom wall 23, and the side wall 22 is welded to the end cap 30.

The electrode assembly 10 comprises a first tab 12 and a second tab 13, wherein the first tab 12 is located at one end of the electrode assembly 10 facing the end cap 30, and the second tab 13 is located at the other end of the electrode assembly 10 that faces away from the end cap 30.

The current collecting member 50 is welded to the first tab 12 to form a first welding portion W1, and the current collecting member 50 is welded to the end cap 30 to form a second welding portion W2. The first tab 12 is electrically connected to the housing 20 by means of the current collecting member 50 and the end cap 30.

The bottom wall 23 is provided with an electrode lead-out hole 231, and the electrode terminal 40 is mounted in the electrode lead-out hole 231 and electrically connected to the second tab 13.

It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

**Claims**

1. A battery cell, comprising:

   a housing provided with an opening;
   an electrode assembly accommodated inside the housing, the electrode assembly being provided with a first tab at an end facing the opening;
   an end cap configured to cover the opening; and
   a current collecting member electrically connected to the housing and welded to the first tab.

2. The battery cell according to claim 1, wherein the current collecting member abuts against an end surface of the first tab facing the end cap, and the current collecting member is welded to the first tab to form a first welding portion.

3. The battery cell according to claim 2, wherein the electrode assembly further comprises a main body, and the first tab protrudes from an end surface of the main body facing the end cap; and
   in a thickness direction of the end cap, a part of the first welding portion formed in the first tab has a size of H1, the first tab protrudes from the end surface by a size of H2, wherein H1 and H2 meet:

$$0.06 \leq H1/H2 \leq 0.9.$$

4. The battery cell according to claim 3, wherein H1 and H2 meet: $0.1 \leq H1/H2 \leq 0.2$.

5. The battery cell according to claim 3 or 4, wherein a value of H1 is between 0.2 mm-1 mm.

6. The battery cell according to any one of claims 2 to 5, wherein the electrode assembly is wound along a central axis; and
in a radial direction of the first tab, a minimum distance between the first welding portion and the central axis is 4 mm -9 mm.

7. The battery cell according to any one of claims 2 to 6, wherein the electrode assembly further comprises a main body, and the main body comprises an end surface facing the end cap and an outer peripheral surface surrounding the end surface;

the first tab protrudes from the end surface of the main body; and
in the radial direction of the first tab, a minimum distance between the first welding portion and the outer peripheral surface is 1 mm -7 mm.

8. The battery cell according to any one of claims 2 to 7, wherein the electrode assembly is wound along a central axis, the first tab comprises N layer structures arranged around the central axis, and an extension direction of the central axis is parallel to the thickness direction of the end cap;

the first tab is composed of a first annular portion and a second annular portion surrounding an outer side of the first annular portion, N1 layer structures are provided in the first annular portion, N2 layer structures are provided in the second annular portion, wherein N = N1 + N2, a value of |N1 - N2| is less than or equal to 2, and N1 and N2 are positive integers; and
the first annular portion is welded to the current collecting member to form a first part, the second annular portion is welded to the current collecting member to form a second part connected to the first part, and the first welding portion is composed of the first part and the second part.

9. The battery cell according to claim 8, wherein N3 continuous layer structures in the first annular portion that are close to the second annular portion are welded to the current collecting member to form the first part, N4 continuous layer structures in the second annular portion that are close to the first annular portion are welded to the current collecting member to form the second part, the N3 continuous layer structures and the N4 continuous layer structures are continuously arranged, wherein N4 > N3 $\geq$ 1, and N3 and N4 are positive integers.

10. The battery cell according to claim 8 or 9, wherein M continuous layer structures of all the layer structures are welded to the current collecting member to form the first welding portion, wherein $1/3 \leq M/N \leq 1/2$, M $\geq$ 2, and M is a positive integer.

11. The battery cell according to any one of claims 2 to 10, wherein a plurality of first welding portions are provided, and the plurality of first welding portions are spaced part from each other in a circumferential direction of the first tab.

12. The battery cell according to any one of claims 2 to 11, wherein in the thickness direction of the end cap, each of the first welding portions is spaced apart from the end cap.

13. The battery cell according to claim 12, wherein the end cap comprises a cap body and a first protrusion protruding from an inner surface of the cap body in a direction facing the first tab, the first protrusion is configured to abut against the current collecting member, and a first avoidance gap for avoiding the first welding portion is formed between the current collecting member and the cap body.

14. The battery cell according to claim 13, wherein a first recess recessed from an outer surface of the cap body in a direction facing the electrode assembly is formed on the end cap at a position corresponding to the first protrusion.

15. The battery cell according to claim 12, wherein the current collecting member comprises a first current collecting portion and a second current collecting portion, the first current collecting portion is connected to the end cap, and the second current collecting portion protrudes from a surface of the first current collecting portion facing the electrode assembly;

the current collecting member is provided with an avoidance recess, and the avoidance recess is located on a side of the second current collecting portion that faces away from the electrode assembly; and
a region of the second current collecting portion that corresponds to a bottom surface of the avoidance recess is welded to the first tab to form the first welding portion.

16. The battery cell according to any one of claims 2 to 15, wherein the current collecting member is welded to the end cap to form a second welding portion.

17. The battery cell according to claim 16, wherein a projection of the first welding portion in the thickness direction of the end cap and a projection of the second welding portion in the thickness direction of the end cap do not overlap.

18. The battery cell according to any one of claims 1 to 14, wherein the current collecting member is directly connected to the housing.

19. The battery cell according to claim 18, wherein the current collecting member is welded to the housing.

20. The battery cell according to claim 18 or 19, wherein the current collecting member is spaced apart from the end cap.

21. The battery cell according to any one of claims 1 to 20, wherein the housing comprises a side wall and a bottom wall connected to the side wall, wherein the side wall extends in the thickness direction of the end cap and is arranged around a periphery of the electrode assembly, and the bottom wall is provided with an electrode lead-out hole;

   the electrode assembly further comprises a second tab, wherein the first tab and the second tab have opposite polarities, and the second tab is arranged at an end of the electrode assembly facing the bottom wall; and
   the battery cell further comprises an electrode terminal mounted in the electrode lead-out hole, and the electrode terminal is electrically connected to the second tab.

22. The battery cell according to claim 21, wherein the bottom wall and the side wall are of an integrally formed structure.

23. The battery cell according to any one of claims 1 to 22, wherein the first tab is a negative tab, and a substrate material of the housing is steel.

24. The battery cell according to any one of claims 1 to 23, wherein the substrate material of the housing and a substrate material of the end cap are the same.

25. The battery cell according to any one of claims 1 to 24, wherein the battery cell is a cylindrical battery cell.

26. A battery, comprising a plurality of battery cells according to any one of claims 1 to 25.

27. A power consuming device, comprising a battery according to claim 26, wherein the battery is configured to provide electric energy.

1

*FIG. 1*

2

*FIG. 2*

6

FIG. 3

7

FIG. 4

*FIG. 5*

*FIG. 6*

*FIG. 7*

*FIG. 8*

10

Y

121

W11
W1
W12

12a

123  122

12b

12

*FIG. 9*

7

X  40

231

23
20
22

13

Z

22  12

50

11

11

10  12

13

321  32  W2

31

W2  30  W1

50

12

*FIG. 10*

FIG. 11

FIG. 12

FIG. 13

FIG. 14

FIG. 15

FIG. 16

## INTERNATIONAL SEARCH REPORT

| International application No. |
|---|
| **PCT/CN2022/122805** |

**A.  CLASSIFICATION OF SUBJECT MATTER**

H01M 50/533(2021.01)i;  H01M 50/536(2021.01)i;  H01M 10/04(2006.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 集流, 转接, 极耳, 壳, 焊接, 盖, battery, cell, collector, transfer, tab, lug, case, shell, container, weld, lid, cover

**C.  DOCUMENTS CONSIDERED TO BE RELEVANT**

| Category* | Citation of document, with indication, where appropriate, of the relevant passages | Relevant to claim No. |
|---|---|---|
| X | CN 113258124 A (JIANGSU CONTEMPORARY AMPEREX TECHNOLOGY LTD.) 13 August 2021 (2021-08-13)<br>        description, paragraphs 0005-0162, and figures 1-9 | 1-27 |
| X | CN 112928401 A (SUZHOU YOULION BATTERY INC.) 08 June 2021 (2021-06-08)<br>        description, paragraphs 0004-0077, and figures 2-17 | 1-27 |
| A | CN 112771714 A (NINGDE CONTEMPORARY AMPEREX TECHNOLOGY CO., LTD.) 07 May 2021 (2021-05-07)<br>        entire document | 1-27 |
| A | CN 111106299 A (NINGDE CONTEMPORARY AMPEREX TECHNOLOGY CO., LTD.) 05 May 2020 (2020-05-05)<br>        entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2022** | **27 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div style="text-align:center">

**INTERNATIONAL SEARCH REPORT**
**Information on patent family members**

</div>

International application No.

**PCT/CN2022/122805**

| Patent document cited in search report | | | Publication date (day/month/year) | Patent family member(s) | | | Publication date (day/month/year) |
|---|---|---|---|---|---|---|---|
| CN | 113258124 | A | 13 August 2021 | None | | | |
| CN | 112928401 | A | 08 June 2021 | None | | | |
| CN | 112771714 | A | 07 May 2021 | WO | 2021102636 | A1 | 03 June 2021 |
| | | | | EP | 3855559 | A1 | 28 July 2021 |
| | | | | US | 2021242549 | A1 | 05 August 2021 |
| | | | | KR | 20220105635 | A | 27 July 2022 |
| CN | 111106299 | A | 05 May 2020 | EP | 3651228 | A1 | 13 May 2020 |
| | | | | US | 2020144585 | A1 | 07 May 2020 |
| | | | | CN | 209056523 | U | 02 July 2019 |

Form PCT/ISA/210 (patent family annex) (January 2015)

**REFERENCES CITED IN THE DESCRIPTION**

**Patent documents cited in the description**

- CN 2021122108 W